# EUROPEAN PATENT SPECIFICATION

(11) **EP 1 722 524 B1**
(45) Date of publication and mention of the grant of the patent: **06.08.2008**
(21) Application number: 06009783.9
(22) Date of filing: 11.05.2006
(51) Int. Cl.: H04L 12/56

(54) **Method and apparatus for processing packet in IPv4/IPv6 combination network**
Vorrichtung und Verfahren zur Packetverarbeitung in einem IPv4/IPv6 Kombinationsnetzwerk
Dispositif et procédé de traitements des paquets dans un réseau de combinaison IPv4/IPv6

(30) Priority: 11.05.2005 KR 20050039523
(43) Date of publication of application: 15.11.2006
(73) Proprietor: Samsung Electronics Co., Ltd., Suwon-si, Gyeonggi-Do (KR)
(72) Inventor: Kim, Sun-Gi, Songpa-gu, Seoul (KR); Huh, Ji-Young, Yongin-si, Gyeonggi-do (KR); Lee, Jae-Hwoon, Yongsan-gu, Seoul (KR); Kim, Kill-Yeon, Yeongtong-gu, Suwon-si, Gyeonggi-do (KR)
(74) Representative: Lang, Johannes

(56) References cited:
- EP-A- 1 294 138
- US-A1- 2002 015 395
- US-A1- 2002 026 525
- US-A1- 2002 181 468

## Description

### BACKGROUND OF THE INVENTION

### Technical Field

The present invention relates to a method and apparatus for processing a packet in an IPv4/IPv6 combination network, and more particularly, to a method and apparatus for processing a packet in an IPv4/IPv6 combination network so as to be capable of minimizing overhead caused in encapsulation of an IP/UDP header for identifying a tunnel session when transmitting a packet in the IPv4/IPv6 combination network.

### Related Art

The Internet is a core infrastructure of information society. With the development of real-time, high quality service such as voice over Internet protocol (VoIP) and Internet TV service, most Internet traffic has changed from traffic which includes text information to multimedia traffic which includes voice, image, and video information. In addition, traffic has dramatically increased.

This multimedia traffic is significantly affected by transmission delay or jitter on the network.

The current Internet protocol version 4 (IPv4)-based Internet uses a short address and a complex header structure to accommodate the rapidly increasing number of hosts and multimedia traffic. This degrades the processing speed of routers and nodes which process traffic and, in turn, the overall performance of the Internet.

Internet protocol version 6 (IPv6) was developed to solve such problems associated with IPv4-based Internet and has features such as an expanded 128 bit address system, a simplified header structure, improved quality of service (QoS), and enhanced security.

In reality, the current Internet cannot be completely converted into an IPv6 network within a short period of time since it is widely used as an IPv4 network. The IPv4 network and IPv6 network will coexist for the time being while the IPv4 network is gradually replaced by the IPv6 network.

Coexistence of IPv6 hosts/routers and IPv4 hosts/routers in a current IPv4 network is critical to successfully building the IPv6 network.

Efficient accommodation of rapidly increasing traffic requires an Internet infrastructure capable of providing QoS required for traffic having different features, such as voice, video, and data. It is also necessary to define a model capable of providing QoS for multimedia traffic in an IPv4/IPv6 combination network which includes both the IPv4 network and the IPv6 network.

Methods for processing packets in such an IPv4/IPv6 combination network, including IPv4 hosts and routers and IPv6 hosts and routers, have been proposed by the Internet Engineering Task Force (IETF). The methods include a dual stack-based method, a header translation method, and a tunneling method.

In the dual stack based method, all hosts and routers have a dual stack protocol prior to completely shifting to an IPv6 network. That is, the method allows both IPv4 and IPv6 to be used until all systems on the Internet use IPv6.

The header translation method is useful when most systems on the Internet use IPv6 but some still use IPv4. A sender translates a header of an IPv6 packet into an IPv4 header for transmission to a recipient when the recipient does not understand IPv6.

The tunneling method is used when two hosts using IPv6 have to communicate through an IPv4 network. An IPv6 packet is encapsulated in an IPv4 packet upon entrance into an IPv4 region, and is decapsulated from the IPv4 packet upon exit from the IPv4 region.

Resource reservation protocol (RSVP), a tunneling method for processing packets in the IPv4/IPv6 combination network, is a protocol which reserves network resources in advance in order to accommodate traffic requiring different QoS in an IP layer.

RSVP may be considered a flow-based model which allows a user to establish a flow as a kind of virtual line from a source to a destination, and to reserve flow-specific resources required by all routers between the source and the destination, thereby guaranteeing QoS.

In the latter regard, flow refers to a collection of packets that have the same source and destination address information, the same source and destination port information, and the same session identifier information.

The current RSVP allows the same resource as is used for an end-to-end session to be reserved, even within a tunnel, by dividing an RSVP session for one flow into an end-to-end session and a tunnel session, mapping the two sessions to each other, and separately reserving a resource for each session in order to support end-to-end RSVP on a path including the tunnel.

Hereinafter, resource reservation protocol (RSVP) will be described in brief.

RSVP is a protocol designed to reserve an end-to-end resource in an integrated service (IntServ) model proposed to provide quality of service (QoS) required by a specific application flow.

The RSVP operates on an Internet protocol (IP), similar to Internet control message protocol (1CMP), Internet group management protocol (IGMP), routing protocol, and the like.

In order to reserve a resource for a unicast or multicast data flow, the RSVP defines a session for each packet flow by selectively using a destination IP address, a transport layer protocol, and destination port information, and defines a sub-flow of each session by selectively using source address information and source port information.

A transmitting endpoint in the flow initializes the session and the sub-flow, and then transmits a path message to establish a resource reservation path to a receiving endpoint.

The path message contains a "SESSION object" containing session information, an "RSVP_HOP object" containing an IP address of an interface, a "Sender_Templeate" defining a sub-flow, a "Sender Tspec" defining traffic properties of the flow, etc.

Since the path message, containing "Route Alert IP option," is directed to a destination, i.e., a receiving endpoint, it is processed by RSVP supporting nodes via all nodes on a path from the transmitting endpoint to the receiving endpoint.

If an error occurs in path establishment at an intermediate node, the intermediate node removes the path message and forwards a path error (PathErr) message reporting the error to a previous node. If no error occurs, the intermediate node establishes a path for the flow and delivers the path message to a next node via the path.

When the receiving endpoint receives the path message, it forwards a reservation (Resv) message to the transmitting endpoint based on the path information established through the path message in a hop-by-hop manner so as to request a resource for desired QoS after the path for the flow is established.

The Resv message contains a "SESSION object," a "RSVP_HOP object," a "Flow spec" defining desired QoS, a "Filter spec" for identifying a sub-flow, etc.

RSVP supporting nodes, i.e., all nodes for which a path is established using a path message, accept or refuse a request for resource reservation using a Resv message which is forwarded in a hop-by-hop manner. When the node accepts the resource reservation request, the node forwards a Resv message to a next node along the path established using the path message, and when the node refuses the request, it forwards a reservation error (ResvErr) message reporting failure of the resource reservation request to the transmitting endpoint.

The current RSVP defines a separate "FILTER_SPEC" or "SENDER_TEMPLATE object" identifying a sub-field based on IP address information and port information, and on IP address information and a flow label field of an IPv6 header, when it is a difficult to use the port information by reason of security in order to discriminate between the session and the sub-flow.

The "RFC 2746" defines a mechanism which supports end-to-end RSVP on a path including a tunnel. The mechanism adopts a basic manner of repeatedly transmitting an RSVP message, i.e., a path message and an Resv message.

In other words, the mechanism is used to perform path establishment within a tunnel section and resource reservation by separately forwarding an RSVP message for the tunnel section as well as the end-to-end RSVP message, and is used to perform resource reservation between two endpoints including the tunnel by mapping between resource reservation established within the tunnel section and resource reservation established outside the tunnel section. The "RFC 2746" defines a new "SESSION_ASSOC" and a "NODE_CHAR object" for such a mechanism.

The "SESSION_ASSOC object" is used to map between the tunnel session and the end-to-end session.

The European Patent Application EP 1 294 138 A2 discloses a router and communication network system reserving network resources in compliance with an RSVP (Resource ReSerVation Protocol), in which a router stores an encapsulated destination address associated with an address of a second host upon encapsulating and transferring a packet addressed to the second host, transfers a first path message transmitted from a first host to make a resource reservation in compliance with a resource reservation protocol, obtains thereafter the encapsulated destination address from the address of the second host, and transmits a second path message in a non-capsulated state to make a resource reservation with the same communication quality as that of the first path message to the encapsulated destination address.

The US Patent Application US 2002/018168 A1 concerns the dynamic reservation of resources according to RSVP protocol for transmitting an application flow in the form of first packets between a radio terminal and a remote unit interconnected via a first IP network and a cellular radio communication network system. The cellular radio communication system uses a second IP network, or even a third IP network, in its core network. According to the invention, the dynamic reservation of resources in the first IP network is completed by a second dynamic reservation of resources in the second IP network, and where necessary a third dynamic reservation of resources in the third IP network. For this, transmission elements of the cellular radio communication system perform the association between the tunnel identity used for transmitting the first packets of the application flow and the parameters assigned to each RSVP session.

### SUMMARY OF THE INVENTION

It is therefore, an objective of the present invention to provide a method and apparatus for processing a packet in an IPv4/IPv6 combination network so as to be capable of identifying each tunnel session without IP/UDP encapsulation when tunneling packets depending on an RSVP mechanism in the IPv4/IPv6 combination network.

According to the present invention, there is provided a system for processing a packet in an IPv4/IPv6 combination network, the apparatus comprising: a transmitting host for transmitting a path message requesting a session resource to a receiving host when having a packet to be transmitted according to a resource reservation protocol (RSVP), and for transmitting the packet via an established end-to-end session; a first node located on a boundary between an IPv6 network and an IPv4 network for establishing a tunnel session that is mapped to the end-to-end session established with the transmitting host, for transmitting a tunnel path message containing identification information for identifying each session to a second node with which the tunnel session is established, and for transmitting the packet, which is received via the end-to-end session, via a mapped tunnel session; the second node for establishing the tunnel session with the first node, and for recognizing the identification information contained in the tunnel path message and transmitting the packet, which is received via the tunnel session, via a mapped end-to-end session; and a receiving host for transmitting a reservation message to the transmitting host so that each session is established, upon receipt of the path message via each node from the transmitting host.

According to still anther aspect of the present invention, there is provided a system for processing a packet in an IPv4/IPv6 combination network, the apparatus comprising: a transmitting host for providing a path message requesting a resource for a session to transmit the packet depending on resource reservation protocol (RSVP), for providing a tunnel path message containing identification information for a tunnel session when the requested resource is reserved, and for transmitting the packet via the tunnel session; a node for transmitting the packet to an end-to-end session mapped to the tunnel session via which the packet is received while managing the identification information for the tunnel session established with the transmitting host and information about the end-to-end session mapped to the tunnel session; and a receiving host for transmitting a reservation message based on a path message received via the node so as to establish the end-to-end session, and for receiving the packet via the end-to-end session.

According to yet another aspect of the present invention, there is provided a method for processing a packet in an IPv4/IPv6 combination network including at least one node, the method comprising the steps of: transmitting, at a transmitting host, a resource reservation protocol (RSVP) dependent path message to a receiving host via each said at least one node; establishing, at the receiving host, at least one end-to-end session in response to the RSVP dependent path message, and transmitting a reservation message to the transmitting host via each said at least one node; establishing, at a first node, a tunnel session mapped to each said at least one end-to-end session when receiving the reservation message, and transmitting a tunnel path message containing identification information for the tunnel session to a second node; including, at the first node, the identification information for the tunnel session in the packet, the tunnel session being mapped to an end-to-end session via which the packet is received from the transmitting host, and transmitting a resultant packet to the second node via the tunnel session; and transmitting, at the second node, the packet to the receiving host via the end-to-end session mapped to the tunnel session based on the identification information of the packet.

The method may further comprise the steps of: encapsulating, at the first node, the received path message, and transmitting the encapsulated path message to the second node; decapsulating, at the second node, the path message, and transmitting the decapsulated path message to the receiving host; establishing, at the receiving host, the end-to-end session in response to the path message, and transmitting a reservation message to the second node; including, at the second node, RSVP supportable information in the reservation message, and then encapsulating the resultant reservation message to the first node; transmitting, at the first node, a tunnel path message containing identification information for the tunnel session mapped to the end-to-end session to the second node in response to the RSVP supportable information contained in the reservation message; and establishing, at the second node, the tunnel session in response to the tunnel path message, and transmitting the tunnel reservation message to the first node.

According to yet another aspect of the present invention, there is provided a method for processing a packet in an IPv4/IPv6 combination network including at least one node, the method comprising the steps of: transmitting, at a transmitting host, a resource reservation protocol (RSVP) dependent path message to a receiving host via a node; establishing, at the receiving host, an end-to-end session with the node based on the RSVP dependent path message, and transmitting a reservation message to the transmitting host via the node; establishing, at the transmitting host, a tunnel session mapped to the end-to-end session with the node when receiving the reservation message, and then transmitting a tunnel path message containing identification information for the tunnel session to the node; including, at the transmitting host, the identification information in the packet, and transmitting a resultant packet to the node via the tunnel session; and transmitting, at the node, the packet to the receiving host via an end-to-end session mapped to the tunnel session based on the identification information of the packet.

The method may further comprise the steps of: encapsulating, at the transmitting host, the header into the path message, and transmitting the encapsulated header to the node; decapsulating, at the node, the header of the path message, and transmitting the decapsulated header to the receiving host; and encapsulating, at the node, the header into the reservation message received from the receiving host, and transmitting the encapsulated header to the transmitting host.

The packet transmission may comprise the steps of: managing, by the node, identification information for each tunnel session; and transmitting the packet via a tunnel session corresponding to identification information contained in the header of the packet received from the transmitting host.

### BRIEF DESCRIPTION OF THE DRAWINGS

A more complete appreciation of the invention, and many of the attendant advantages thereof, will be readily apparent as the same becomes better understood by reference to the following detailed description when considered in conjunction with the accompanying drawings, in which like reference symbols indicate the same or similar components, wherein:
FIG. 1 illustrates a SESSION_ASSOC object of a typical RSVP;
FIG. 2 illustrates a NODE_CHAR object of a typical RSVP;
FIG. 3 illustrates the flow of a path message of an RSVP in a typical IPv4/IPv6 combination network;
FIG. 4 illustrates the flow of a reservation message of an RSVP in a typical IPv4/IPv6 combination network;
FIG. 5 illustrates the flow of a tunnel path message of an RSVP in a typical IPv4/IPv6 combination network;
FIG. 6 illustrates the flow of a tunnel reservation message of an RSVP in a typical IPv4/IPv6 combination network;
FIG. 7 illustrates packet transmission through a plurality of tunnels in a typical IPv4/IPv6 combination network;
FIG. 8 illustrates the flow of a path message transmission of an RSVP according to an exemplary embodiment of the present invention;
FIG. 9 illustrates the flow of a reservation message of an RSVP in an IPv4/IPv6 combination network according to an exemplary embodiment of the present invention;
FIG. 10 illustrates the flow of a tunnel path message of an RSVP in an IPv4/IPv6 combination network according to an exemplary embodiment of the present invention;
FIG. 11 illustrates an IPv6 header according to an exemplary embodiment of the present invention;
FIG. 12 illustrates the flow of a tunnel reservation message of an RSVP in an IPv4/IPv6 combination network according to an exemplary embodiment of the present invention;
FIG. 13 illustrates the flow of a packet in an IPv4/IPv6 combination network according to an exemplary embodiment of the present invention;
FIG. 14 is a flow diagram illustrating the flow of an RSVP message in an IPv4/IPv6 combination network according to an exemplary embodiment of the present invention;
FIG. 15 illustrates the flow of an end-to-end path message in an IPv4/IPv6 combination network according to an exemplary embodiment of the present invention;
FIG. 16 illustrates the flow of an end-to-end reservation message of an RSVP in an IPv4/IPv6 combination network according to an exemplary embodiment of the present invention;
FIG. 17 illustrates the flow of a tunnel path message of an RSVP in an IPv4/IPv6 combination network according to an exemplary embodiment of the present invention;
FIG. 18 illustrates the flow of a tunnel reservation message of an RSVP in an IPv4/IPv6 combination network according to an exemplary embodiment of the present invention; and
FIG. 19 illustrates the flow of a packet in an IPv4/IPv6 combination network according to an exemplary embodiment of the present invention.

### DETAILED DESCRIPTION OF THE INVENTION

Hereinafter, a method and apparatus for processing a packet in an IPv4/IPv6 combination network according to the present invention will be described in detail with reference to the accompanying drawings.

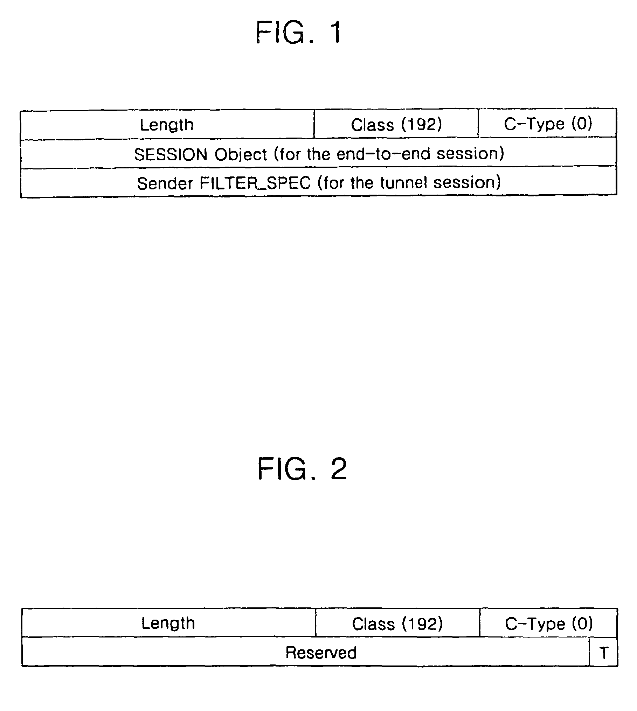

FIG. 1 illustrates a SESSION_ASSOC object of a typical RSVP.

As shown in FIG. 1, a "SESSION_ASSOC object" includes a length field containing length information, a class field having .class information, a type field containing type information, a "SESSION object" field containing information about an end-to-end session, and a "FILTER_SPEC information" field containing information about a tunnel session.

The "SESSION_ASSOC object" is contained in a path message which is forwarded from a transmitting endpoint to a receiving endpoint.

The "NODE_CHAR object" delivers information, indicating whether the last node of a tunnel section supports the tunnel RSVP mechanism defined in "RFC 2746", to the starting node of the tunnel section.

FIG. 2 illustrates a NODE_CHAR object of a typical RSVP.

As shown in FIG. 2, when the last node of a tunnel section supports the tunnel RSVP mechanism, a "T bit" reporting whether the node can support RSVP is set in the "NODE_CHAR object" of the Resv message, which is forwarded from a receiving endpoint to a transmitting endpoint, and then the resultant Resv message is forwarded.

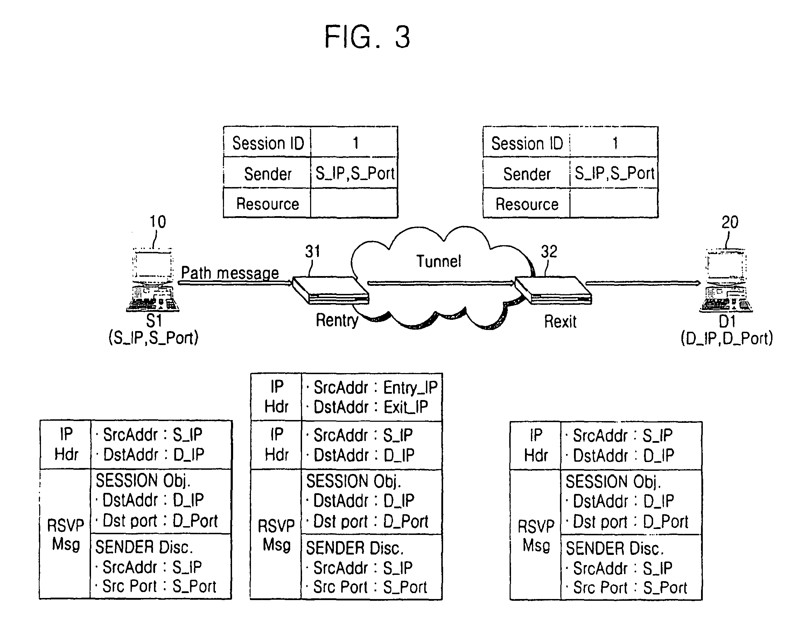

FIG. 3 illustrates the flow of a path message of an RSVP in a typical IPv4/IPv6 combination network.

A transmitting endpoint (S1) 10 and a receiving endpoint (D1) 20 shown in FIG. 3 are included in an IPv4 network, and a tunnel established between Rentry 31 as a starting node and Rexit 32 as a last node is included in an IPv6 network.

Routers and nodes on paths from the transmitting endpoint 10 to the first node 31, from the first node 31 to the last node 32, and from the last node 32 to the receiving endpoint 20 will be omitted.

For example, when the transmitting endpoint 10 desires to transmit traffic to the receiving endpoint 20 at a rate of 10 Mbps, the transmitting endpoint 10 forwards an RSVP dependent end-to-end path message to the receiving endpoint 20 so as to reserve an end-to-end bandwidth of 10 M.

The transmitting endpoint 10 sets source address information of an IP header as its IP address information "S_IP" and destination address information as IP address information "D_IP" of the receiving endpoint 20.

The transmitting endpoint 10 also sets destination address information "D_IP" and destination port information "D_Port" in the "SESSION object" of the end-to-end path message, and sets source address information of a "SENDER_TEMPLATE object" as its address information "S_IP" and source port information as its port information "S_Port."

Because the end-to-end path message as forwarded includes a "Router Alert IP option," it is processed by all routers that support RSVP between the transmitting endpoint 10 and the receiving endpoint 20.

When Rentry 31, the starting node of the tunnel, receives the path message, it stores the state of the path for the end-to-end session, and encapsulates the path message so as to forward the encapsulated path message to the Rexit 32 since it cannot be aware of whether the last node of the tunnel, Rexit 32, supports the RSVP mechanism.

Rexit 32 decapsulates the encapsulated path message, and establishes a path for the end-to-end session so as to send the path message to the receiving endpoint 20.

When the receiving endpoint 20 receives the path message, it forwards a Resv message to the transmitting endpoint 10 in a hop-by-hop manner.

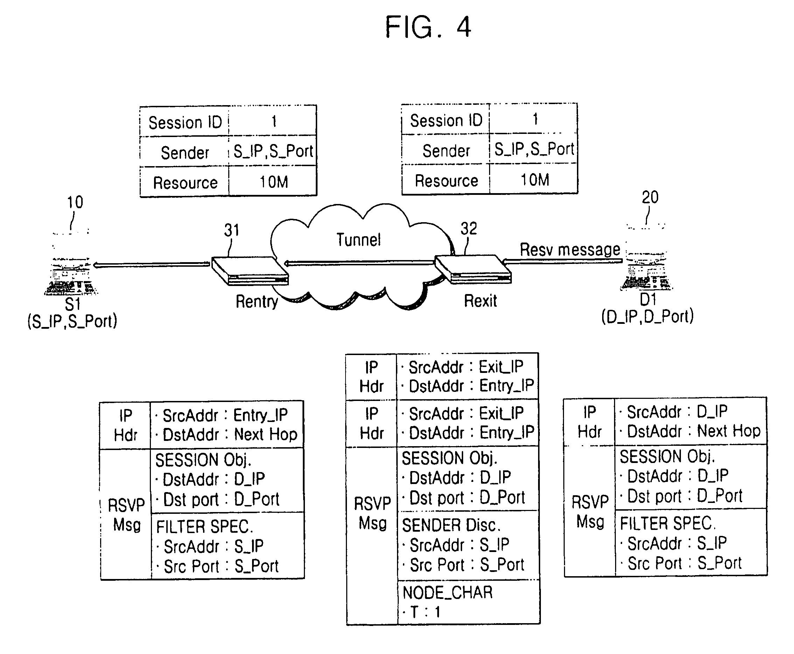

FIG. 4 illustrates the flow of a reservation message of an RSVP in a typical IPv4/IPv6 combination network.

Referring to FIG. 4, a receiving endpoint 20 sets source address information of an IP header Hdr as "D_IP" and destination address information as IP address information of Rexit 32 which is an upstream node Next_Hop supporting an RSVP mechanism, and includes the same information as the path message in a "SESSION object" of the RSVP message and the same information as an "SENDER_TEMPLATE object" of the path message in a "FILTER SPEC object" of the RSVP message so as to forward the resultant RSVP message to Rexit 32.

When Rexit 32 receives the Resv message from the receiving endpoint 20, it reserves a resource for the end-to-end session, adds to the Resv message a "NODE_CHAR object" having a "T bit" reporting to Rentry 31 that Rentry 31 can support the tunnel RSVP since there is no tunnel session mapped to the end-to-end session, and encapsulates the Resv message so as to transmit the encapsulated Resv to Rentry 31.

Rentry 31 decapsulates the received Resv message, removes "NODE_CHAR" from the Resv message, and then reserves a resource for the end-to-end session. Rentry 31 forwards the Resv message, from which the "NODE_CHAR" has been removed, to the transmitting endpoint 10.

When Rentry 31 has the capability of supporting the tunnel RSVP mechanism, Rentry 31 forwards the Resv message to the transmitting endpoint 10 and the tunnel path message to Rexit 32.

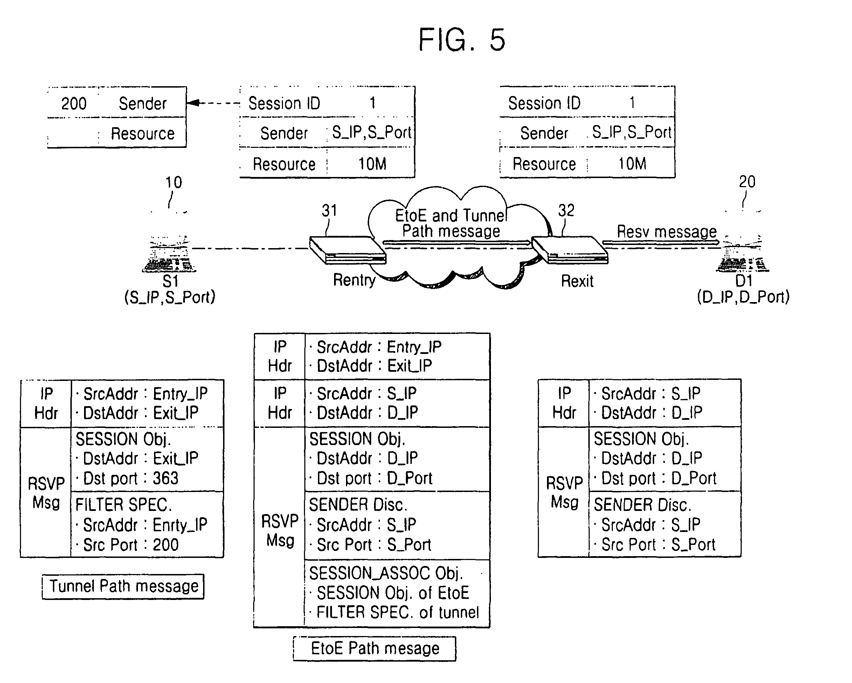

FIG. 5 illustrates the flow of a tunnel path message of an RSVP in a typical IPv4/IPv6 combination network.

Referring to FIG. 5, when a starting node of a tunnel, Rentry 31, receives a Resv message, Rentry 31 creates a tunnel session mapped to the end-to-end session, and forwards a tunnel path message for reserving a resource within the tunnel and an end-to-end path message (E to E path message) for reporting modified information on the path to Rexit 32.

Since a transmitting node set in the tunnel path message is Rentry 31 and a receiving node is Rexit 32, source address information of an IP header is set as address information "Entry_IP" of Rentry 31, destination address information is set as "Exit_IP," destination address information of the "SESSION object" is set as "Exit_IP" and destination port information is set as (for example) "363."

Source address information of the "SENDER_TEMPLATE object" of the tunnel path message becomes "Entry_IP," and the source port information becomes a specific value assigned by Rentry 31 to identify each flow within the tunnel.

The tunnel path message allows RSVP supportable nodes present in the tunnel established between Rentry 31 and Rexit 32 to establish a path for the tunnel session.

Furthermore, the end-to-end path message, which contains the "SESSION_ASSOC object" delivering mapping information between the end-to-end session and the tunnel session, allows Rexit 32 to map the tunnel session to the end-to-end session.

When receiving the end-to-end path message, Rexit 32 sets mapping information corresponding to the "SESSION_ASSOC object" of the end-to-end path message, removes the "SESSION_ASSOC object," and then forwards a tunnel Resv message to Rentry 31 to request a resource for the tunnel session mapped to the end-to-end session along a path established within the tunnel to a receiving endpoint.

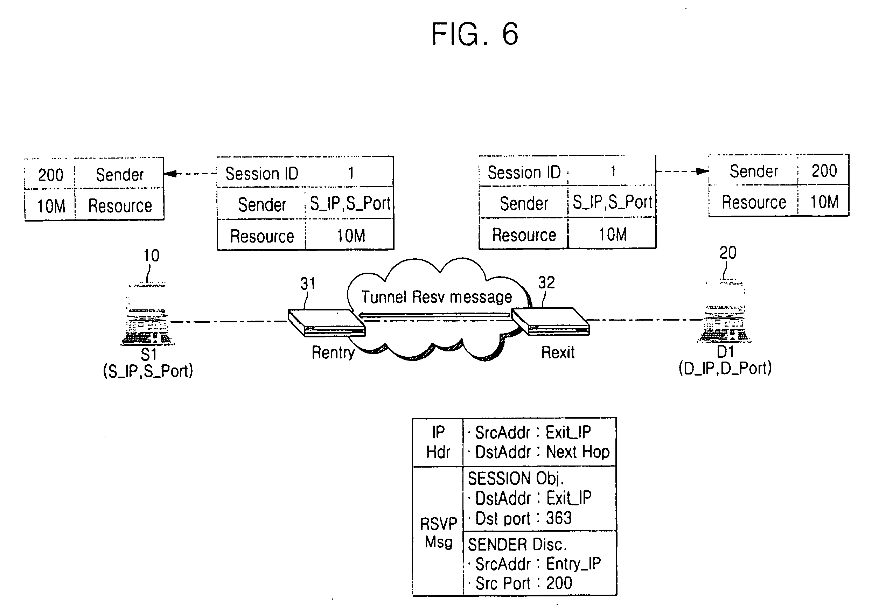

FIG. 6 illustrates the flow of a tunnel reservation message of an RSVP in a typical IPv4/IPv6 combination network.

Referring to FIG. 6, source address information contained in an IP header of a tunnel Resv message is set as "Exit_IP" and destination address information is set as address information of an upstream node Next_hop of Rexit 32 which supports RSVP.

In the tunnel Resv message, destination address information of the "SESSION object" is set as "Exit_IP," destination port information is set as "363," source address information of the "FILTER SPEC object" is set as "Entry_IP," and the source port information is set to a value of 200, which Rentry 31 assigns for the tunnel session corresponding to the end-to-end session.

The tunnel Resv message is sent to nodes capable of supporting RSVP in the tunnel established between Rexit 32 and Rentry 31 in a hop-by-hop manner so that each of the nodes reserves the tunnel resource.

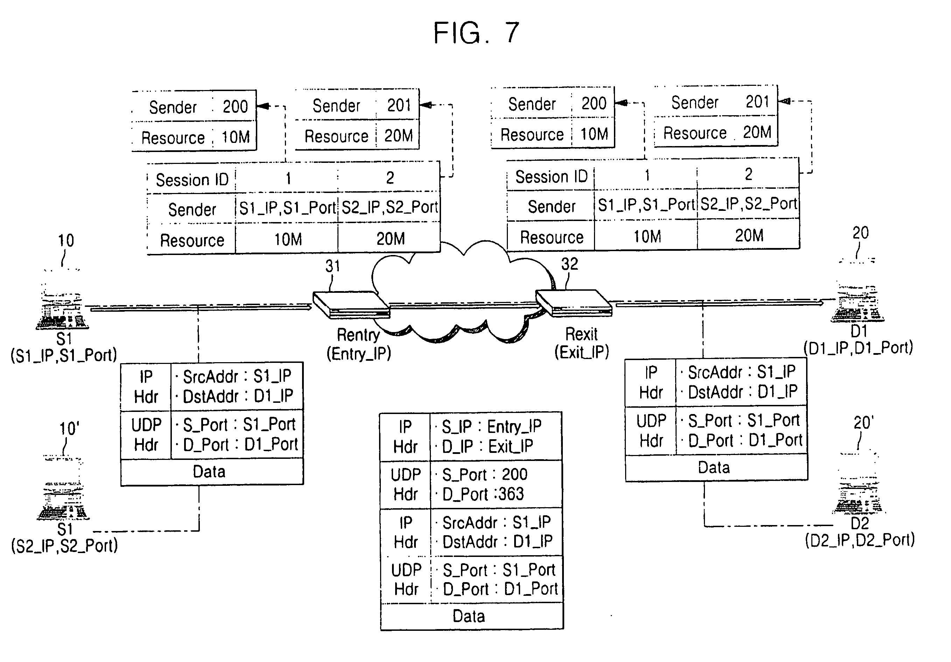

FIG. 7 illustrates packet transmission through a plurality of tunnels in a typical IPv4/IPv6 combination network.

One example, wherein a first transmitting endpoint 10 reserves a resource for transmitting a packet to a first receiving endpoint 20 at a rate of 10 Mbps, and wherein a second transmitting endpoint 10' reserves a resource for transmitting a packet to a second receiving endpoint 20' at a rate of 200 Mbps, will be described with reference to FIG. 7.

Rentry 31 assigns source ports, identifying a session in a tunnel established between the first transmitting endpoint 10 and the second transmitting endpoint 10', as "200" and "201 ".

When receiving a packet from the first transmitting endpoint 10, Rentry 31 encapsulates an IP header and a UDP header of the packet so as to transmit the encapsulated IP header and UDP header to Rexit 32.

Destination port information of the encapsulated IP and UDP headers in the packet is the same for all sessions, and source port information of the UDP header is set to a different value and forwarded depending on each session established between endpoints, so that an RSVP supportable node in the tunnel identifies each session based on the source port information of the received packet so as to provide QoS required for the session.

Rexit 32 decapsulates the IP and UDP headers of the received packet so as to transmit the decapsulated IP and UDP headers to the receiving endpoint 20.

The RSVP mechanism defined in the "RFC 2746" allows the starting node and last node of a tunnel section to send a tunnel RSVP message for reserving a resource in the tunnel section instead of end-to-end hosts, and to support end-to-end RSVP in a path including the tunnel by mapping the end-to-end session and the tunnel session.

However, because the tunnel sessions in the RSVP mechanism have the same IP address information of the transmitting endpoint 10, destination IP address information and destination port information, the RSVP mechanism discriminates between the tunnel sessions based on their source port information.

Thus, it is required for the IP/UDP header to be encapsulated in order that all packets passing through the tunnel section be assigned a desired resource in the tunnel section, and the IP/UDP encapsulation causes more overhead compared to IP encapsulation, thereby wasting network resources.

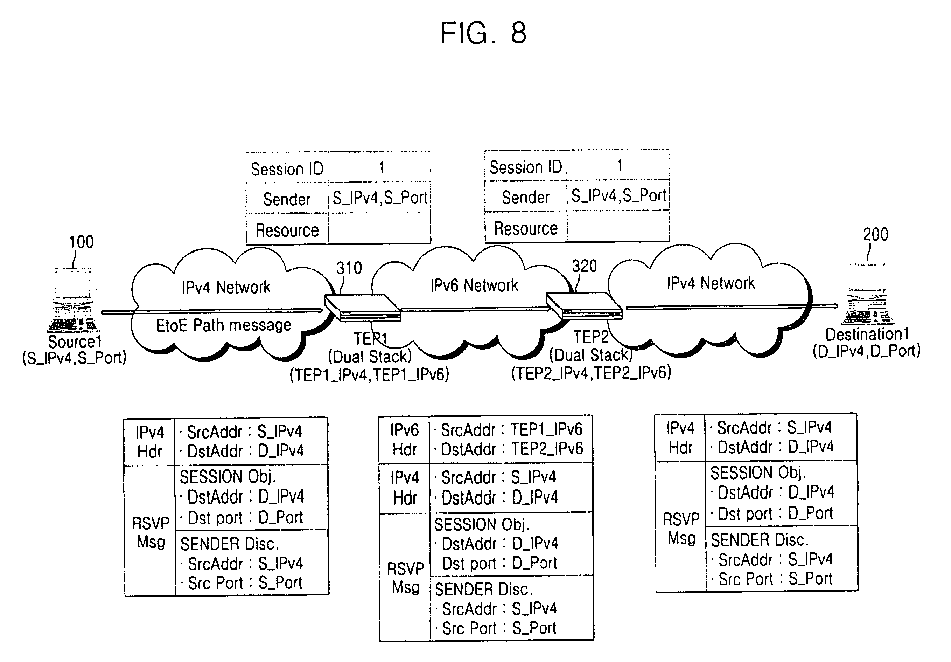

FIG. 8 illustrates the flow of a path message transmission of an RSVP according to an exemplary embodiment of the present invention.

Referring to FIG. 8, a transmitting endpoint (Source1) 100 and a receiving endpoint (Destination1) 200 are IPv4 hosts, and a first node (TEP1) 310 and a second node (TEP2) 320, which are a starting node and a last node of the tunnel, respectively, support a dual stack, i.e., an IPv4/IPv6 stack.

Intermediate nodes on paths from the transmitting endpoint 100 to the first node 310, from the first node 310 to the second node 320, and from the second node 320 to the receiving endpoint 200 are not shown.

The transmitting endpoint 100 sets source address information of an IP header as its IP address information "S_IPv4" and destination address information as "D_IPv4" which is the IP address information of the receiving endpoint 200.

The transmitting endpoint 100 sets destination address information "D_IPv4" and destination port information "D_Port" in a "SESSION object" of an RSVP message, and sets source address information as its address information "S_IPv4" and source port information as its port information "S_Port" in a "SENDER_TEMPLATE object", so as to thereby produce an end-to-end (E to E) path message.

Because the end-to-end path message, which is produced by the transmitting endpoint 100, as forwarded, includes a "Router Alert IP option," it is processed by all RSVP supporting routers between the transmitting endpoint 100 and the receiving endpoint 200.

When the starting node of the tunnel, the first node 310, receives the end-to-end path message, it stores the state of a path for the end-to-end session and encapsulates the end-to-end path message for transmission to the second node 320 because the first node 310 cannot know whether the last node of the tunnel, the second node 320, has the capability of supporting the RSVP mechanism.

The first node 310 sets the source address information of the IPv6 header as its IPv6 address information "TEP1_IPv6" and the destination address information as IPv6 address information "TEP2_IPv6 of the second node 320."

The second node 320 decapsulates the encapsulated end-to-end path message, and establishes a path for the end-to-end session so as to transmit the end-to-end path message to the receiving endpoint 200 via the path.

Upon receipt of the end-to-end path message, the receiving endpoint 200 forwards an end-to-end Resv message to the transmitting endpoint 100 in a hop-by-hop manner.

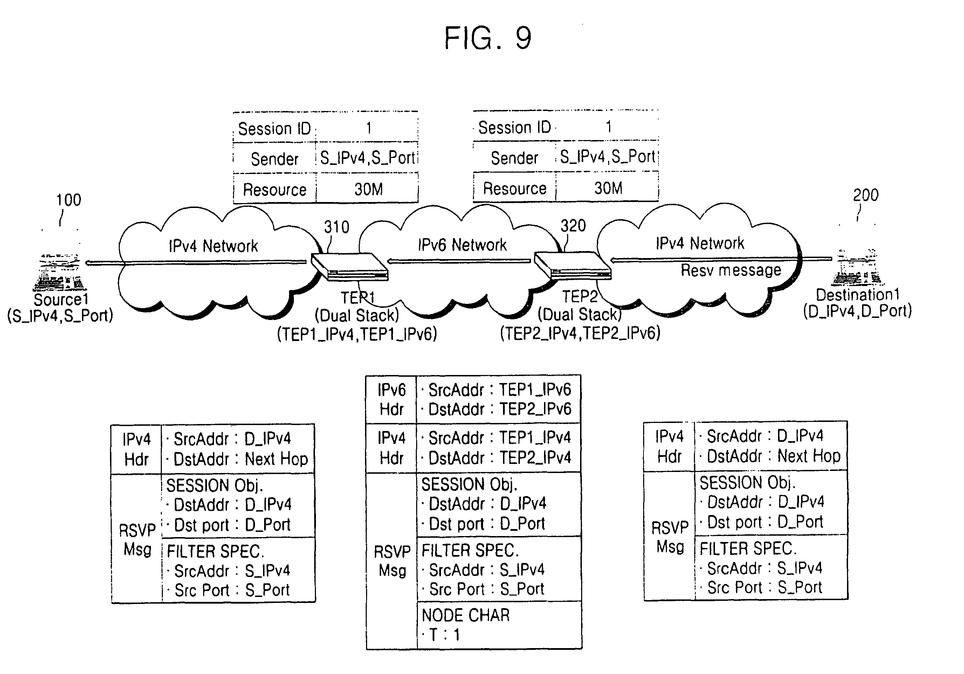

FIG. 9 illustrates the flow of a reservation message of an RSVP in an IPv4/IPv6 combination network according to an exemplary embodiment of the present invention.

Referring to FIG. 9, a receiving endpoint 200 sets source address information of an IP header Hdr as "D_IPv4" and destination address information as IPv4 address information "D_IPv4" of a second node 320, which is an upstream node (Next_Hop) supporting an RSVP mechanism. The receiving endpoint 200 includes the same information as the path message in a "SESSION object" of the RSVP message and the same information as a "SENDER_TEMPLATE object" of the path message in a "FILTER SPEC object" so as to transmit the RSVP message to the second node 320.

Upon receipt of the Resv message from the receiving endpoint 200, the second node 320 reserves a resource for the end-to-end session. The second node 320 also adds to the Resv message a "NODE_CHAR object" having a "T bit" reporting to the first node 310 that the second node 320 has the capability of supporting the tunnel RSVP since there is no tunnel session mapped to the end-to-end session, encapsulates the Resv message, and forwards the encapsulated Resv message to the first node 310.

The first node 310 decapsulates the Resv message, removes "NODE_CHAR" from the Resv message, and then reserves a resource for end-to-end session. The first node 310 forwards the Resv message, from which the "NODE_CHAR" has been removed, to a transmitting endpoint 100 of the tunnel.

When the first node 310 receives a Resv message having the T bit of the "NODE_CHAR object" set to a specific value (e.g., "1"), it determines that the second node 320, which is the last node of the tunnel, is capable of supporting the tunnel RSVP mechanism, forwards the Resv message to the transmitting endpoint 100 as an uplink, and creates a tunnel session mapped to the end-to-end session so as to transmit the tunnel path message to the second node 200 via the tunnel session.

In this respect, the first node 310 may manage information about the end-to-end session and the tunnel session mapped to the end-to-end session using a mapping table.

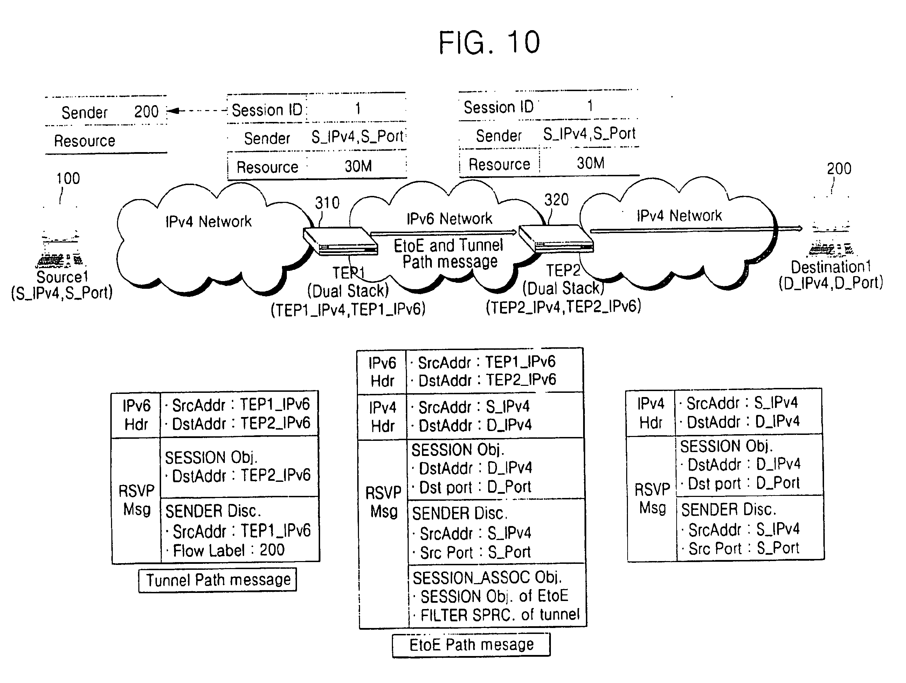

FIG. 10 illustrates the flow of a tunnel path message of an RSVP in an IPv4/IPv6 combination network according to an exemplary embodiment of the present invention.

Referring to FIG. 10, a first node 310 sets source address information of an IPv6 header of the tunnel path message as "TEP1_IPv6" and destination address information as an IPv6 address "TEP2_IPv6" of a second node.

The first node 310 also sets destination IP address information D_IPv4 as destination information and destination port information D_Port in a "SESSION object", and sets a "flow label" value of a "SENDER_TEMPLATE object."

That is, the first node 310 sets the destination address information which is the IPv6 address information of the second node 320 in the "SESSION object." the source address information in the "SENDER_TEMPLATE object" as "TEP1_IPv6," and a "flow label" value to a specific value for identifying the tunnel session, so that RSVP supporting nodes on the path to the second node 320 set the state of a path for the flow.

Furthermore, the first node 310 adds a "SESSION_ASSOC object" to the end-to-end path message for transmission to the second node 320 so that the second node 320 maps the end-to-end session to the tunnel session, the "SESSION_ASSOC object" including a "SESSION object" of the end-to-end session containing IP address and port information of the receiving endpoint 200 and a "FILTER_SPEC object" of the tunnel session containing IP address information and a "flow label" value of the first node 310.

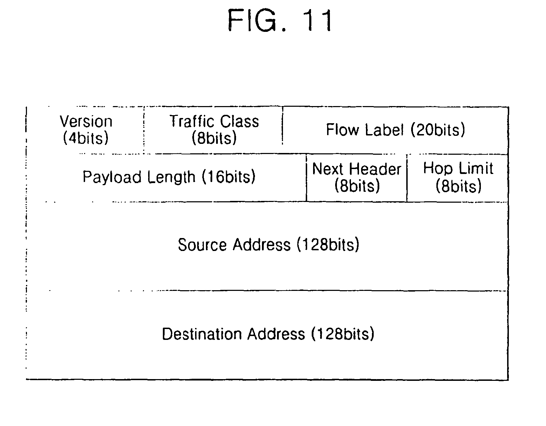

FIG. 11 illustrates an IPv6 header according to an exemplary embodiment of the present invention.

Referring to FIG. 11, the IPv6 header is composed of a version field, a traffic class field, a flow label field, a payload length field, a next header field, a hop limit field, a source address field, and a destination address field.

The version field contains IP version number information, and the traffic class field determines a packet priority of the transmitting device.

The flow label field is a label field for identifying the structure of a packet. That is, the flow label field is a new field which is added to the IPv6 specific to allow a specific packet flow to be provided with special service.

The payload length field is an unsigned integer type field, and contains remaining number information of the IPv6 header.

The next header field defines the type of a header subsequent to the IP header. The next header field has values defined in "RFC 1700."

The hop limit field defines a maximum path number of a hop, which is of an unsigned integer type. The hop limit field decrements by one by means of each node each time the packet is forwarded. The packet is ignored when the hop limit field value becomes "0."

The source address field is 128-bit address information of a transmitting node, and the destination address field is 128-bit address information of a packet receiving node.

The first node 310 sets source address information in a "SENDER_TEMPLATE object" of the tunnel path message and sets the "flow label" value as a specific value, e.g., "200" for identifying a tunnel session mapped to each flow, so that a tunnel session via which the received packet will be forwarded is identified.

When the second node 320 receives the encapsulated tunnel path message, it decapsulates the tunnel path message and maps the end-to-end session to the tunnel session based on the "SESSION_ASSOC object" of the tunnel path message.

That is, the second node 320 establishes the tunnel session using information corresponding to the tunnel "FILTER_SPEC object" of the "SESSION_ASSOC object", and maps the tunnel session to the end-to-end session defined in the end-to-end "SESSION object."

In addition, the second node 320 removes the "SESSION_ASSOC object" from the end-to-end path message, and forwards the end-to-end path message to the destination, the receiving endpoint 200, in a downstream manner.

Upon receipt of the tunnel path message for the tunnel session, the second node 320 establishes a path for the tunnel session, and forwards a tunnel Resv message for reserving a resource corresponding to the end-to-end session at the tunnel session using mapping information between the end-to-end session and the tunnel session to the first node 310 in an upstream manner.

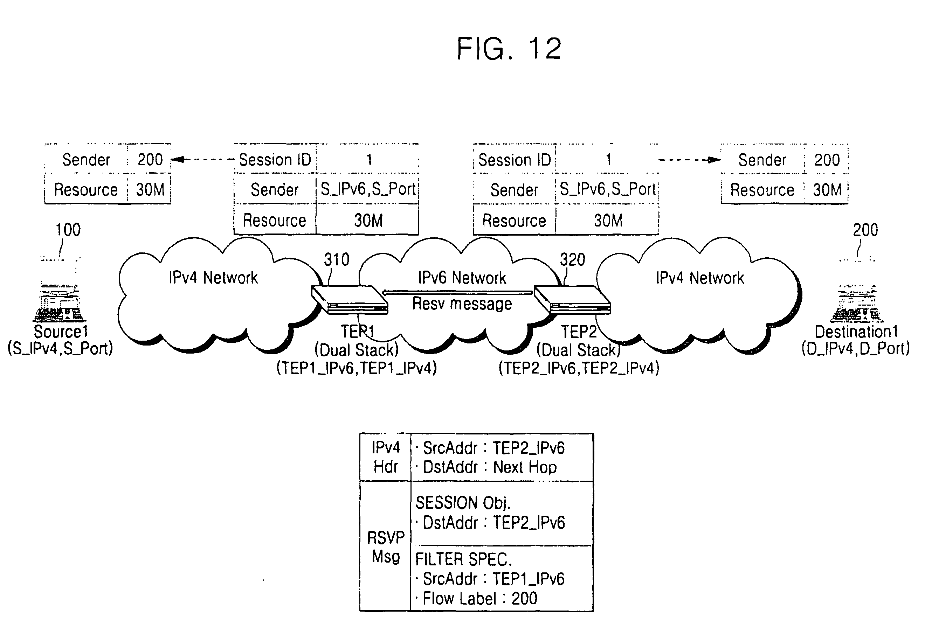

FIG. 12 illustrates the flow of a tunnel reservation message of an RSVP in an IPv4/IPv6 combination network according to an exemplary embodiment of the present invention.

Referring to FIG. 12, the second node 320 sets source address information as its IPv6 address information "TEP2_IPv6" and destination address information as an address (Next_Hop) of an RSVP supporting upstream node.

The second node 320 sets destination address information in the "SESSION object" as "TEP2_IPv6," source address information in the "FILTER SPEC object" as "TEP1_IPv6," and a "flow label" value to a specific value, "200."

The tunnel Resv message is forwarded in a hop-by-hop manner, allowing RSVP supporting nodes on a path within the tunnel to reserve a resource for the tunnel session. Upon receipt of the tunnel Resv message, the first node 310 reserves a resource for the tunnel session mapped to the end-to-end session.

If the session resource for transmitting the packet is reserved, the transmitting endpoint 100 forwards the packet to the receiving endpoint 200 via the first node 310 and the second node 320.

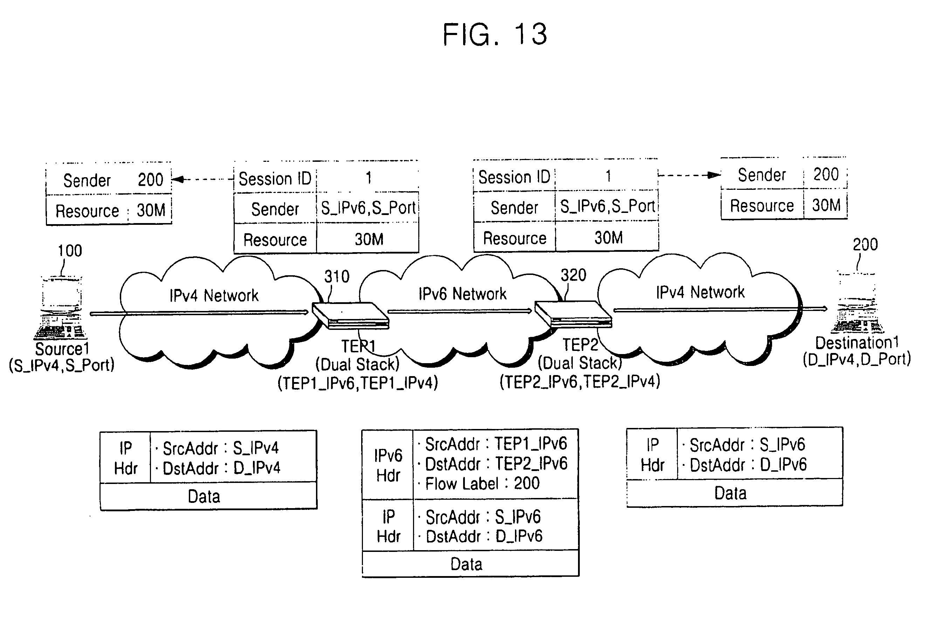

FIG. 13 illustrates the flow of a packet in an IPv4/IPv6 combination network according to an exemplary embodiment of the present invention.

Referring to FIG. 13, a transmitting endpoint 100 forwards a produced packet to a first node 310, and the first node 310 encapsulates the received packet in the IPv6 header using information about the tunnel session mapped to the end-to-end session.

The first node 310 sets source address information of the IPv6 header as its IPv6 address information "TEP1_IPv6," destination address information as IPv6 address information "TEP2_IPv6" of a second node, and a "flow label" value to a specific value, "200."

The RSVP supporting nodes on the path in the tunnel transmit the packet via a tunnel session corresponding to the "flow label" value of the IPv6 header of the received packet.

Because the source address information and the destination address information of all packets passing through the tunnel section are "TEP1_IPv6" and "TEP2_IPv6," respectively, and the "flow label" value is set to a different value depending on sessions, the RSVP supporting nodes are able to transmit the packet via a different session depending on the "flow label" value of the IP header.

That is, the starting node 310 of the tunnel session is allowed to transmit the packet via a different tunnel session by setting the "flow label" value to a different specific value depending on the end-to-end session, via which the packet is received, in order to forward the packet via the tunnel session mapped to the end-to-end session, via which the packet is received, when one session resource is reserved in the IPv4/IPv6 combination network.

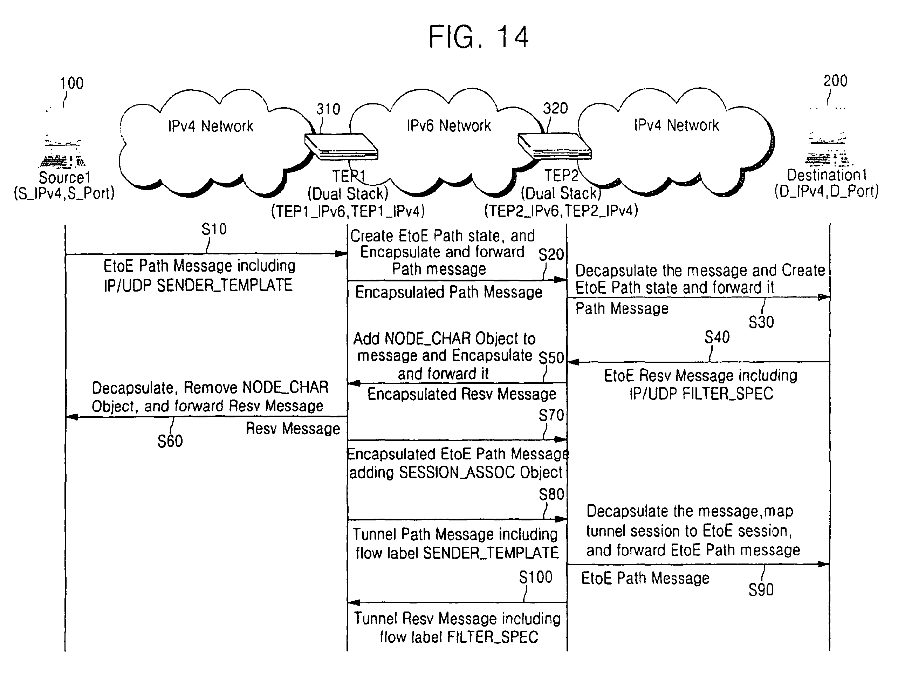

FIG. 14 is a flow diagram illustrating the flow of an RSVP message in an IPv4/IPv6 combination network according to an exemplary embodiment of the present invention.

Referring to FIG. 14, a transmitting endpoint (Source 1) 100 forwards an end-to-end path message (E to E path message) to a first node 310, which is a starting node of a tunnel session (S10).

The transmitting endpoint 100 sets destination address information "D_IPv4" and destination port information "D_Port" in a "SESSION object" of the end-to-end path message, and sets source address information of a "SENDER_TEMPLATE object" as its address information "S_IPv4" and source port information as its port information "S_Port."

Upon receipt of the end-to-end path message, the first node 310 stores the state of a path for the end-to-end session, encapsulates the end-to-end path message, and forwards the encapsulated end-to-end path message to a second node 320 (S20).

The second node 320 decapsulates the received encapsulated end-to-end path message, establishes a path for the end-to-end session, and forwards the end-to-end path message to the receiving endpoint (Destination 1) 200 via the path (S30).

When the receiving endpoint 200 receives the end-to-end path message, it forwards an end-to-end reservation message to the second node 320 in a hop-by-hop manner (S40).

In this regard, the receiving endpoint 200 includes the same information as the end-to-end path message in the "SESSION object" of the end-to-end Resv message, and the same information as a "SENDER_TEMPLATE object" of the end-to-end path message in a "FILTER SPEC object", so as to forward the resultant message to the second node 320.

When the second node 320 receives the end-to-end Resv message, it reserves a resource for the end-to-end session, adds to the end-to-end Resv message a "NODE_CHAR object" having a "T bit" reporting to the first node 310 that the second node 320 has the capability of supporting the tunnel RSVP since there is no tunnel session mapped to the end-to-end session, encapsulates the Resv message, and forwards it to the first node 310 (S50).

The first node 310 decapsulates the end-to-end Resv message, removes "NODE_CHAR" from the message, and then reserves a resource for the end-to-end session. The first node 310 forwards the end-to-end Resv message, from which "NODE_CHAR" has been removed, to the transmitting endpoint 100 (S60).

When the first node 310 receives the end-to-end Resv message having a T bit of the "NODE_CHAR object" set to a specific value, e.g. ("1"), it determines that the second node 320 has the capability of supporting the tunnel RSVP mechanism, forwards the end-to-end Resv message to the transmitting endpoint 100, establishes a tunnel session mapped to the end-to-end session, and forwards the tunnel path message to the second node 320 (S70).

The first node 310 sets destination IP address information, D_IPv4, and destination port information, D_Port, in the "SESSION object", and sets a "flow label" value in the "SENDER_TEMPLATE object."

Furthermore, the first node 310 adds a "SESSION_ASSOC object" to the end-to-end path message, and forwards it to the second node 320 so that the second node 320 maps the end-to-end session to the tunnel session. The "SESSION_ASSOC object" includes a "SESSION object" of the end-to-end session containing IP address and port information of the receiving endpoint 200, and a "FILTER_SPEC object" of the tunnel session containing IP address information and a specific "flow label" value of the first node 310 (S80).

When the second node 320 receives the encapsulated end-to-end path message, it decapsulates the end-to-end path message, and maps the end-to-end session to the tunnel session using the "SESSION_ASSOC object."

That is, the second node 320 establishes the tunnel session using information corresponding to the tunnel "FILTER_SPEC object" of the "SESSION_ASSOC object", and maps the tunnel session to the end-to-end session defined in the end-to-end "SESSION object."

In addition, the second node 320 removes the "SESSION_ASSOC object" from the end-to-end path message, and forwards it to the destination, the receiving endpoint 200 (S90).

When the second node 320 receives the tunnel path message for the tunnel session, the second node 320 establishes a path for the tunnel session, and forwards a tunnel Resv message for reserving a source corresponding to the end-to-end session at the tunnel session using mapping information between the end-to-end session and the tunnel session to the first node 310 (S100).

When a resource for the session for transmitting the packet is reserved, the transmitting endpoint 100 forwards the packet to the first node 310, and the first node 310 forwards the packet via a tunnel session mapped to the end-to-end session via which the packet is received. The first node 310 sets the specific value as a "flow label" value according to the end-to-end session via which the packet is received in encapsulating the IPv6 header of the received packet, so that the packet is forwarded via a session for which the resource is reserved according to the flow.

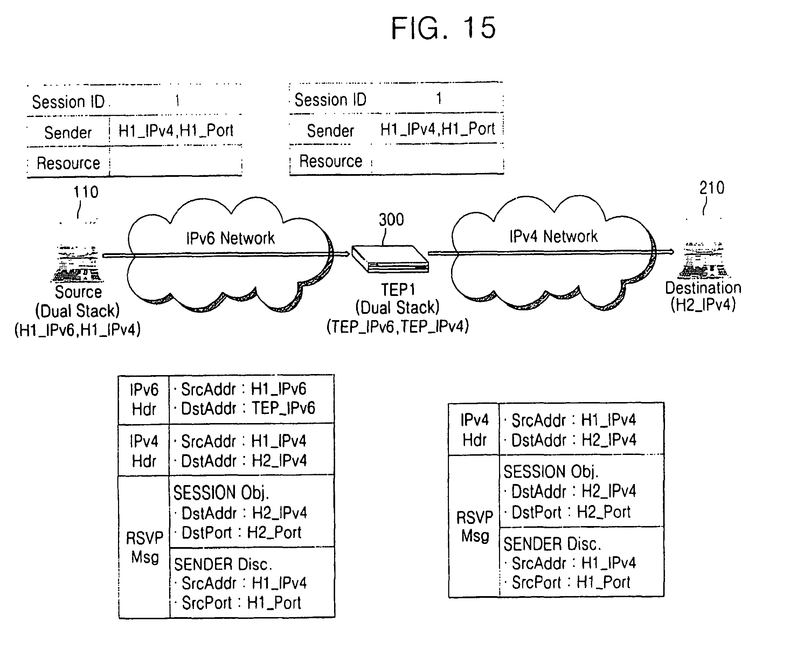

FIG. 15 illustrates the flow of an end-to-end path message in an IPv4/IPv6 combination network according to an exemplary embodiment of the present invention.

In FIG. 15, it is assumed that the transmitting endpoint 110 and the node 300 are IPv4/IPv6 dual stacks and that the receiving endpoint 210 is an IPv4v host.

Intermediate nodes on paths from the transmitting endpoint 110 to the node 300, and from the node 300 to the receiving endpoint 210, will be omitted.

The transmitting endpoint 110 sets source address information of an IPv6 header as its IP address information "S_IPv6," and destination address information as address information "TEP_IPv6" of the node 300. The receiving endpoint 210 sets source address information of the IPv4 header as its IPv4 address information "H1_IPv4", and destination address information as IPv4 address information "H2_IPv4" of the receiving endpoint 210.

The transmitting endpoint 110 sets destination address information H2_IPv4" and destination port information "H2_Port" in the "SESSION object" of the end-to-end path message, and sets source address information of the "SENDER_TEMPLATE object" as its address information "H1_IPv4" and source port information as its port information "H1_Port."

Because the end-to-end path message produced by the transmitting endpoint 110, as forwarded, includes a "Router Alert IP option," it is processed by all RSVP supporting routers between the transmitting endpoint 110 and the receiving endpoint 210.

The node 300 decapsulates the received end-to-end path message, establishes a path for the end-to-end session, and forwards the message to the receiving endpoint 210 via the path.

When the receiving endpoint 210 receives the end-to-end path message, it forwards the Resv message to the transmitting endpoint 110 in a hop-by-hop manner.

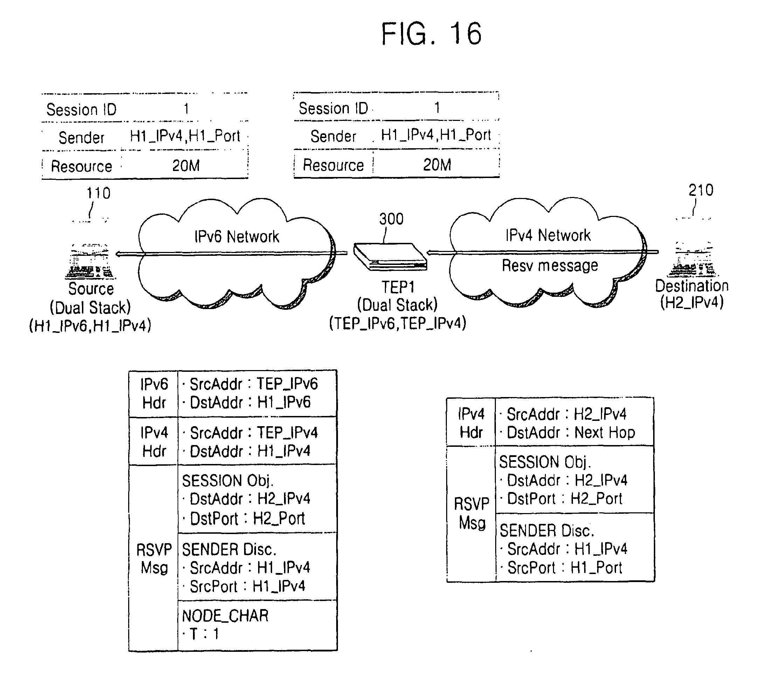

FIG. 16 illustrates the flow of an end-to-end reservation message of an RSVP in an IPv4/IPv6 combination network according to an exemplary embodiment of the present invention.

Referring to FIG. 16, when a receiving endpoint 210 receives an end-to-end path message, the receiving endpoint 210 sets source address information of the IP header Hdr as "H2_IPv4" and destination address information as "TEP_IPv4" of the node 300, which is an upstream node Next_Hop supporting an RSVP mechanism, and forwards a Resv message to the node 300. The Resv message has a "SESSION object" containing the same information as the end-to-end path message and a "FILTER SPEC object" containing the same information as the "SENDER_TEMPLATE object" of the end-to-end path message.

When the node 300 receives the Resv message from the receiving endpoint 210, it reserves resources for the end-to-end session, adds to the Resv message a "NODE_CHAR object" having a "T bit" reporting to the transmitting endpoint 110 that the node 300 has the capability of supporting the tunnel RSVP since there is no tunnel session mapped to the end-to-end session, encapsulates the Resv message, and forwards it to the first node 310.

The transmitting endpoint 110 determines that the node 300 is able to support the tunnel RSVP mechanism when the T bit of the "NODE_CHAR object" in the Resv message received from the node 300 is set to a specific value (e.g., "1"), creates a tunnel session mapped to the end-to-end session, and transmits the tunnel path message to the node 300.

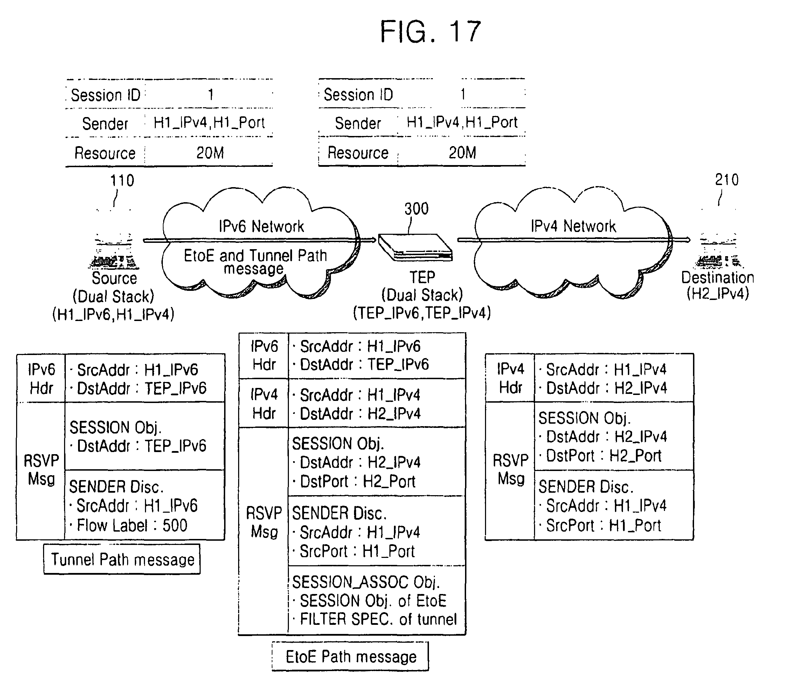

FIG. 17 illustrates the flow of a tunnel path message of an RSVP in an IPv4/IPv6 combination network according to an exemplary embodiment of the present invention.

Referring to FIG. 17, a transmitting endpoint 110 sets source address information of an IPv6 header of a tunnel path message as "H11_IPv6" and destination address information as an IPv6 address "TEP_IPv6" of a node 300.

The transmitting endpoint 110 sets destination IP address information, TEP_IPv4, in a "SESSION object" of the tunnel path message, and a "flow label" value in a "SENDER_TEMPLATE object."

That is, the transmitting endpoint 110 sets destination address information which is IPv6 address information of the node 300 in the "SESSION object," source address information in the "SENDER_TEMPLATE object" as "H1_IPv6," and the "flow label" value to a specific value (e.g. "500") for identifying a tunnel session, so that RSVP supporting nodes on a path from the transmitting endpoint 110 to the node 300 set the state of a path for the flow.

Furthermore, when the node 300 receives a tunnel path message, the node 300 adds a "SESSION_ASSOC object" to the end-to-end path message for transmission to the second node 320 so that the receiving endpoint 210 maps the tunnel session mapped to the end-to-end session. The "SESSION_ASSOC object" includes a "SESSION object" of the end-to-end session containing IP address and port information of the receiving endpoint 200 and a "FILTER_SPEC object" of the tunnel session containing IP address information and a "flow label" value of the first node 300 .

When the node 300 receives the tunnel path message for the tunnel session, the node 300 sets a path for the tunnel session, and forwards a tunnel Resv message for reserving resources corresponding to the end-to-end session at the tunnel session to the transmitting endpoint 110 using mapping information between the end-to-end session and the tunnel session.

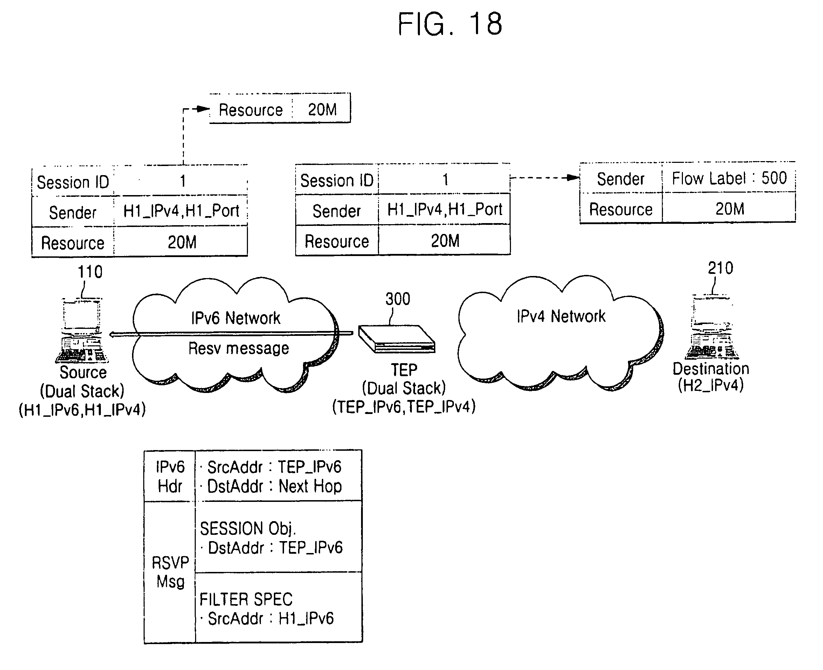

FIG. 18 illustrates the flow of a tunnel reservation message of an RSVP in an IPv4/IPv6 combination network according to an exemplary embodiment of the present invention.

Referring to FIG. 18, a node 300 sets source address information as its IPv6 address information "TEP_IPv6," and destination address information as an address Next_Hop of an upstream node supporting RSVP, i.e., IPv6 address information of a transmitting endpoint 110.

The node 300 sets destination address information of an "SESSION object" as "TEP_IPv6," source address information of an "FILTER SPEC object" as "H1_IPv6," and a "flow label" value to a specific value, "500."

The tunnel Resv message allows RSVP support nodes on a path in the tunnel to reserve a resource for a tunnel session in a hop-by-hop manner. When the transmitting endpoint 110 receives a tunnel reservation message, it reserves a resource for the tunnel session mapped to the end-to-end session.

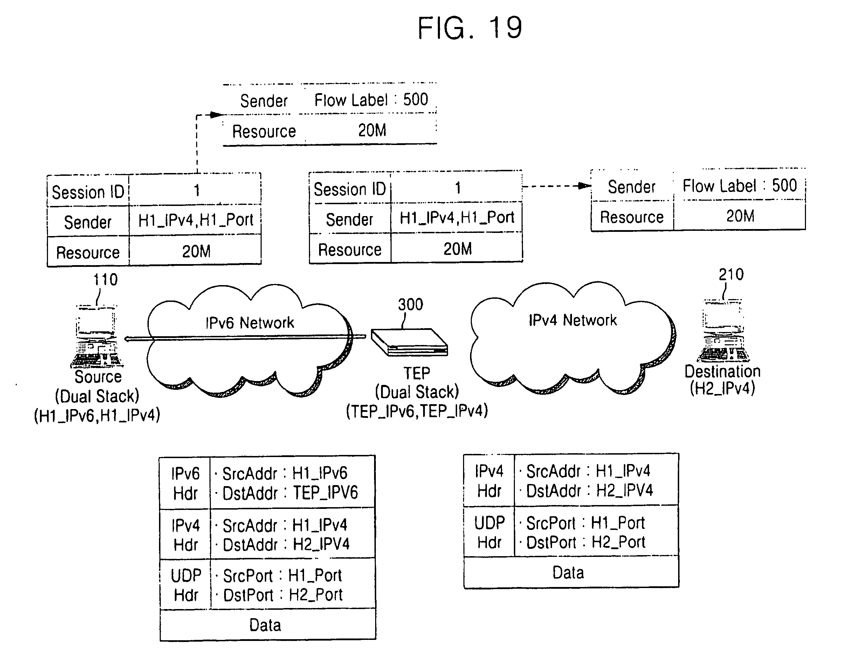

FIG. 19 illustrates the flow of a packet in an IPv4/IPv6 combination network according to an exemplary embodiment of the present invention.

Referring to FIG. 19, a transmitting endpoint 110 sets source address information of an IPv6 header of a produced packet as its IPv6 address information "H1_IPv6", destination address information as IPv6 address information "TEP_IPv6" of a node, and a "flow label" value to a specific value, "200."

The node 300 forwards a packet via the tunnel session mapped to the end-to-end session according to the "flow label" value of the IPv6 header of the received packet.

Because the source address information and the destination address information of all packets passing through the tunnel section are the same as "TEP1_IPv6" and "TEP2_IPv6," respectively, and the "flow label" value is set to a different value depending on sessions, each RSVP supporting node can transmit the packet via a different session according to the "flow label" value of the IP header.

That is, the starting node 310 of the tunnel session is allowed to transmit the packet via a different tunnel session by setting the "flow label" value to a different specific value depending on the end-to-end session via which the packet is received so as to forward the packet via the tunnel session mapped to the end-to-end session via which the packet is received when one session resource is reserved in the IPv4/IPv6 combination network.

According to the present invention as described above, it is possible to minimize packet overhead by identifying a tunnel session through a flow label field of an IPv6 header in a tunnel section when the packet is forwarded in a tunneling manner depending on RSVP in the IPv4/IPv6 combination network.

While the present invention has been described with reference to exemplary embodiments thereof, it will be understood by those skilled in the art that various changes in form and detail may be made therein without departing from the scope of the present invention as defined by the following claims.

## Claims

1. A system for processing a packet in an IPv4/IPv6 combination network, the system comprising:
a transmitting host (100) for transmitting a path message requesting a session resource to a receiving host (200) when having a packet to be transmitted according to a resource reservation protocol, further referenced as "RSVP", and for transmitting the packet via an established end-to-end session;
a first node (310) located on a boundary between an IPv6 network and an IPv4 network for establishing a tunnel session that is mapped to the end-to-end session established with the transmitting host (100), for transmitting a tunnel path message containing identification information for identifying each session to a second node (320) with which the tunnel session is established, and for transmitting the packet, which is received via the end-to-end session, via a mapped tunnel session;
the second node (320) for establishing the tunnel session with the first node (310), and for recognizing the identification information contained in the tunnel path message and transmitting the packet, which is received via the tunnel session, via a mapped end-to-end session; and
a receiving host (200) for transmitting a reservation message to the transmitting host (100) so that each session is established, upon receipt of the path message via each node from the transmitting host (100).

2. The system according to claim 1, wherein the first node (310) comprises, in the received packet, identification information corresponding to source and destination information contained in the packet while managing information about the tunnel session mapped to the end-to-end session, and is adapted to transmit a resulting packet via the tunnel session.

3. The system according to claim 1, wherein when receiving the reservation message from the receiving host (200), the first node (310) comprises the reservation message in a "flow label" field of an IPv6 header of the packet having the identification information for identifying the tunnel session, and is adapted to transmit a resulting packet.

4. The system according to claim 1, further comprising at least one node located between the first node (310) and the second node (320) for transmitting the packet to a tunnel session corresponding to the identification information contained in a header of the packet.

5. The system according to claim 1, wherein the second node (320) is adapted to decapsulate the tunnel path message received from the first node (310), and then to forward the decapsulated tunnel path message to the receiving host (200) via an end-to-end session corresponding to the mapped tunnel session.

6. The system according to claim 1, wherein each node is a dual stack node having both an IPv4 stack and an IPv6 stack.

7. The system according to claim 1, wherein, when at least one end-to-end session is established, the first node (310) is adapted to establish each tunnel session mapped to each end-to-end session with the second node (320), and the first node (310) comprises identification information for a tunnel session, corresponding to one of information and source destination information in a packet received from each host, in the packet, and is adapted to transmit a resultant packet to the mapped tunnel session.

8. The system according to claim 1, wherein the second node (320) comprises RSVP support information in a reservation message received from the receiving host (200), and is adapted to transmit a resultant reservation message when the RSVP dependent session can be established.

9. A system for processing a packet in an IPv4/IPv6 combination network, the system comprising:
a transmitting host (110) for providing a path message requesting a resource for a session to transmit the packet depending on resource reservation protocol, further referenced as "RSVP", for providing a tunnel path message containing identification information for a tunnel session when the requested resource is reserved, and for transmitting the packet via the tunnel session;
a node (300) for transmitting the packet to an end-to-end session mapped to the tunnel session via which the packet is received while managing the identification information for the tunnel session established with the transmitting host (110) and information about the end-to-end session mapped to the tunnel session; and
a receiving host (210) for transmitting a reservation message based on a path message received via the node so as to establish the end-to-end session, and for receiving the packet via the end-to-end session.

10. The system according to claim 9, wherein the node is adapted to decapsulate an IPv6 header of a packet received from the transmitting host (110) and to forward the decapsulated packet to the receiving host (210).

11. The system according to claim 9, wherein the transmitting host (110) is adapted to encapsulate the packet by including the identification information for the tunnel session in an IPv6 header of the packet.

12. A method for processing a packet in an IPv4/IPv6 combination network which comprises at least one node, the method comprising the steps of:
transmitting, at a transmitting host (100), a resource reservation protocol, further referenced as "RSVP" dependent path message to a receiving host via each said at least one node;
establishing, at the receiving host (200), at least one end-to-end session in response to the RSVP dependent path message, and transmitting a reservation message to the transmitting host via each said at least one node;
establishing, at a first node (310), a tunnel session mapped to each said at least one end-to-end session when receiving the reservation message, and transmitting a tunnel path message containing identification information for the tunnel session to a second node (320);
including, at the first node (310), the identification information for the tunnel session in the packet, the tunnel session being mapped to an end-to-end session via which the packet is received from the transmitting host, and transmitting a resultant packet to the second node via the tunnel session; and
transmitting, at the second node (320), the packet to the receiving host (200) via the end-to-end session mapped to the tunnel session based on the identification information of the packet.

13. The method according to claim 12, wherein the tunnel path message is produced by the first node (310) by encapsulating an IPv6 header containing the identification information for each said tunnel session when receiving the reservation message.

14. The method according to claim 12, wherein each said at least one node transmits the packet to the tunnel session corresponding to the identification information contained in a header of the received packet while managing the identification information for each tunnel session.

15. The method according to claim 12, wherein the identification information is set in a "flow label" field of an IPv6 header.

16. The method according to claim 12, further comprising the steps of:
encapsulating, at the first node (310), the received RSVP dependent path message, and transmitting the encapsulated path message to the second node (320);
decapsulating, at the second node (320), the encapsulated path message, and transmitting the decapsulated path message to the receiving host (200);
establishing, at the receiving host (200), the end-to-end session in response to the received decapsulated path message, and transmitting a reservation message to the second node (320);
including, at the second node (320), RSVP supportable information in the reservation message, and then transmitting a resultant reservation message to the first node (310);
transmitting, at the first node (310), to the second node (320) a tunnel path message, containing identification information for the tunnel session mapped to the end-to-end session, in response to the RSVP supportable information contained in the reservation message; and
establishing, at the second node (320), the tunnel session in response to the tunnel path message, and transmitting the tunnel reservation message to the first node (310).

17. A method for processing a packet in an IPv4/IPv6 combination network including at least one node, the method comprising the steps of: ,
transmitting, at a transmitting host (110), a resource reservation protocol, further referenced as "RSVP", dependent path message to a receiving host (210) via a node (300);
establishing, at the receiving host (210), an end-to-end session with the node (300) based on the RSVP dependent path message, and transmitting a reservation message to the transmitting host (110) via the node (300);
establishing, at the transmitting host (110), a tunnel session mapped to the end-to-end session with the node (300) when receiving the reservation message, and then transmitting a tunnel path message containing identification information for the tunnel session to the node (300);
including, at the transmitting host (110), the identification information in the packet, and transmitting a resultant packet to the node (300) via the tunnel session; and
transmitting, at the node (300), the packet to the receiving host (210) via an end-to-end session mapped to the tunnel session based on the identification information of the packet.

18. The method according to claim 17, further comprising the steps of:
encapsulating, at the transmitting host (110), a header into the RSVP dependent path message, and transmitting the encapsulated header to the node (300);
decapsulating, at the node (300), the header of the RSVP dependent path message, and transmitting the decapsulated header to the receiving host (210); and
encapsulating, at the node (300), the header into the reservation message received from the receiving host (210), and transmitting the encapsulated header to the transmitting host (110).

19. The method according to claim 17, wherein packet transmission comprises the steps of:
managing, at the node (300), identification information for each tunnel session; and
transmitting the packet via a tunnel session corresponding to the identification information contained in a header of the packet received from the transmitting host (110).

## Patentansprüche

1. System zum Bearbeiten eines Pakets in einem IPv4/IPv6 Kombinationsnetzwerk, das System aufweisend:
einen Sendehost (100) zum Übermitteln einer Pfadmeldung, die eine Sitzungsressource anfordert an einen Empfangshost (200) wenn es ein zu übermittelndes Paket hat in Übereinstimmung mit einem Rssourcereservierungsprotokoll, nachfolgend als "RSVP" bezeichnet, und zum Übermitteln des Paket durch eine hergestellte Ende-zu-Ende-Sitzung;
einen ersten Knoten (310), der an eine Grenze zwischen einem IPv6 Netzwerk und einem IPv4 Netzwerk angeordnet ist, zum Herstellen einer Tunnelsitzung, die der Ende-zu-Ende-Sitzung zugeordnet ist, die mit dem Sendehost (100) hergestellt wird, zum Übermitteln einer Tunnelpfadmeldung, die Identifizierungsinformation zum Identifizieren jeder Sitzung zu einem zweiten Knoten (320), mit dem die Tunnelsitzung hergestellt wird, beinhaltet, und zum Übermitteln des Pakets, das durch die Ende-zu-Ende-Sitzung, durch eine zugeordnete Tunnelsitzung empfangen wird;
einen zweiten Knoten (320) zum Herstellen der Tunnelsitzung mit dem ersten Knoten (310), und zum Erkennen der in der Tunnelpfadmeldung beinhalteten Identifizierungsinformation und Übermitteln des Pakets, das durch die Tunnelsitzung durch eine zugeordnete Ende-zu-Ende-Sitzung empfangen wird; und
einen Empfangshost (200) zum Übermitteln einer Reservierungsmeldung an den Sendehost (100), so dass jede Sitzung hergestellt wird, beim Empfang der Pfadmeldung durch jeden Knoten von dem Sendehost (100).

2. System nach Anspruch 1, wobei der erste Knoten (310) in dem empfangenen Paket Identifizierungsinformation aufweist, die der in dem Paket beinhalteten Quelle- und Zielinformation entspricht, beim Verwalten der Information über die Tunnelsitzung, die der Ende-zu-Ende-Sitzung zugeordnet ist, und geeignet ist zum Übermitteln eines resultierenden Pakets durch die Tunnelsitzung.

3. System nach Anspruch 1, wobei beim Empfang der Reservierungsmeldung von dem Empfangshost (200), der erste Knoten (310) die Reservierungsmeldung in ein "Flussetikett" Feld, eines IPv6 Kopfes des Pakets aufweist, das die Identifizierungsinformation zum Identifizieren der Tunnelsitzung aufweist, und geeignet ist zum Übermitteln eines resultierenden Pakets.

4. System nach Anspruch 1, weiterhin aufweisend mindestens einen Knoten, der zwischen dem ersten Knoten (310) und dem zweiten Knoten (320) angeordnet ist, zum Übermitteln des Pakets an eine Tunnelsitzung, die der in einem Kopf des Pakets beinhalteten Identifizierungsinformation entspricht.

5. System nach Anspruch 1, wobei der zweite Knoten (320) geeignet ist zum Dekapseln der Tunnelpfadmeldung, die von dem ersten Knoten (310) empfangen wird, und dann zum Weiterleiten der dekapselten Tunnelpfadmeldung an den Empfangshost (200) durch eine Ende-zu-Ende-Sitzung, die der zugeordneten Tunnelsitzung entspricht.

6. System nach Anspruch 1, wobei jeder Knoten ein doppelter Stackknoten mit jeweils einem IPv4 Stack und einem IPv6 Stack ist.

7. System nach Anspruch 1, wobei, wenn mindestens eine Ende-zu-Ende-Sitzung hergestellt ist, der erste Knoten (310) geeignet ist zum Herstellen von jeder Tunnelsitzung, die jeder Ende-zu-Ende-Sitzung zugeordnet ist, mit dem zweiten Knoten (320), und der erste Knoten (310) Identifizierungsinformation in dem Paket für eine Tunnelsitzung aufweist, die einer der Information und Quelle-Ziel-Information in einem von jedem Host empfangenen Paket entspricht, und geeignet ist zum Übermitteln eines resultierenden Pakets an die zugeordnete Tunnelsitzung.

8. System nach Anspruch 1, wobei der zweite Knoten (320) RSVP Unterstützungsinformation in einer von dem Empfangshost (200) empfangenen Reservierungsmeldung aufweist, und geeignet ist, zum Übermitteln einer resultierenden Reservierungsmeldung, wenn die auf RSVP beruhende Sitzung hergestellt werden kann.

9. System zum Bearbeiten eines Pakets in einem IPv4/IPv6 Kombinationsnetzwerk, das System aufweisend:
einen Sendehost (110) zum Bereitstellen einer Pfadmeldung, die eine Ressource für eine Sitzung anfordert, um das Paket zu übermitteln, abhängig von Ressourcereservierungsprotokoll, nachfolgend als "RSVP" bezeichnet, zum Bereitstellen einer Tunnelpfadmeldung, die Identifizierungsinformation für eine Tunnelsitzung beinhaltet, wenn die angeforderte Ressource reserviert wird, und zum Übermitteln des Pakets durch die Tunnelsitzung;
einen Knoten (300) zum Übermitteln des Pakets an eine Ende-zu-Ende-Sitzung, die der Tunnelsitzung zugeordnet ist, durch die das Paket empfangen wird, beim Verwalten der Identifizierungsinformation für die Tunnelsitzung, die mit dem Sendehost (110) hergestellt wird, und der Information über die Ende-zu-Ende-Sitzung, die der Tunnelsitzung zugeordnet ist; und
einen Empfangshost (210) zum Übermitteln einer Reservierungsmeldung auf der Basis einer Pfadmeldung, die durch den Knoten empfangen wird, um die Ende-zu-Ende-Sitzung herzustellen und zum Empfangen des Pakets durch die Ende-zu-Ende-Sitzung.

10. System nach Anspruch 9, wobei der Knoten geeignet ist zum Dekapseln eines IPv6 Kopfes eines Pakets, das von dem Sendehost (110) empfangen wird, und zum Weiterleiten des dekapselten Pakets an den Empfangshost (210).

11. System nach Anspruch 9, wobei der Sendehost (110) geeignet ist zum Einkapseln des Pakets durch Einbeziehen der Identifizierungsinformation für die Tunnelsitzung in einem IPv6 Kopf des Pakets.

12. Verfahren zum Bearbeiten eines Pakets in einem IPv4/IPv6 Kombinationsnetzwerk, das mindestens einen Knoten aufweist, wobei das Verfahren die folgenden Schritte aufweist:
Übermitteln, bei einem Sendehost (100), einer auf Ressourcereservierungsprotokoll, nachfolgend als "RSVP" bezeichnet, beruhenden Pfadmeldung an einen Empfangshost über jeden des mindestens einen Knotens;
Erstellen, bei dem Empfangshost (200), mindestens einer Ende-zu-Ende-Sitzung in Antwort auf die auf RSVP beruhende Pfadmeldung, und Übermitteln einer Reservierungsmeldung an den Sendehost durch jeden des mindestens einen Knotens;
Erstellen, bei einem ersten Knoten (310), einer Tunnelsitzung, die zu jeder der mindestens einen Ende-zu-Ende-Sitzung zugeordnet ist, beim Empfang der Reservierungsmeldung, und Übermitteln einer Tunnelpfadmeldung, die Identifizierungsinformation für die Tunnelsitzung beinhaltet an einen zweiten Knoten (320);
Einbeziehen, bei dem ersten Knoten (310), der identifizierungsinformation für die Tunnelsitzung in das Paket, wobei die Tunnelsitzung einer Ende-zu-Ende-Sitzung zugeordnet ist, durch die das Paket von dem Sendehost empfangen wird, und Übermitteln eines resultierenden Pakets an den zweiten Knoten durch die Tunnelsitzung; und
Übermitteln, bei dem zweiten Knoten (320), des Pakets an den Empfangshost (200) durch die Ende-zu-Ende-Sitzung, die der Tunnelsitzung zugeordnet ist, basierend auf der Identifizierungsinformation des Pakets.

13. Verfahren nach Anspruch 12, wobei die Tunnelpfadmeldung von dem ersten Knoten (310) erzeugt wird durch Einkapseln eines IPv6 Kopfes, der die Identifizierungsinformation für jede Tunnelsitzung beinhaltet, beim Empfang der Reservierungsmeldung.

14. Verfahren nach Anspruch 12, wobei jeder des mindestens einen Knotens das Paket an die Tunnelsitzung übermittelt, die der in einem Kopf des empfangenen Pakets beinhalteten Identifizierungsinformation entspricht beim Verwalten der Identifizierungsinformation für jede Tunnelsitzung.

15. Verfahren nach Anspruch 12, wobei die Identifizierungsinformation in einem "Flussetikett" Feld eines IPv6 Kopfes angesetzt wird.

16. Verfahren nach Anspruch 12, weiterhin die folgenden Schritte aufweisend:
Einkapseln, bei dem ersten Knoten (310), der empfangenen auf RSVP beruhenden Pfadmeldung und Übermitteln der eingekapselten Pfadmeldung an den zweiten Knoten (320);
Dekapseln, bei dem zweiten Knoten (320), der eingekapselten Pfadmeldung und Übermitteln der dekapselten Pfadmeldung an den Empfangshost (200);
Erstellen, bei dem Empfangshost (200), der Ende-zu-Ende-Sitzung in Antwort auf die empfangene dekapselte Pfadmeldung und Übermitteln einer Reservierungsmeldung an den zweiten Knoten (320);
Einbeziehen, bei dem zweiten Knoten (320), der RSVP unterstützbaren Information in die Reservierungsmeldung, und dann Übermitteln einer resultierenden Reservierungsmeldung an den ersten Knoten (310);
Übermitteln, bei dem ersten Knoten (310), an den zweiten Knoten (320) einer Tunnelpfadmeldung, die Identifizierungsinformation für die der Ende-zu-Ende-Sitzung zugeordnete Tunnelsitzung beinhaltet in Antwort auf die RSVP unterstützbare Information, die in der Reservierungsmeldung beinhaltet ist; und
Erstellen, bei dem zweiten Knoten (320), der Tunnelsitzung in Antwort auf die Tunnelpfadmeldung, und Übermitteln der Tunnelreservierungsmeldung an den ersten Knoten (310).

17. Verfahren zum Bearbeiten eines Pakets in einem IPv4/IPv6 Kombinationsnetzwerk, das mindestens einen Knoten enthält, wobei das Verfahren die folgenden Schritte aufweist:
Übermitteln, bei einem Sendehost (110) einer auf Ressourcereservierungsprotokoll, nachfolgend als "RSVP" bezeichnet, beruhenden Pfadmeldung an einen Empfangshost (210) durch einen Knoten (300);
Erstellen, bei dem Empfangshost (210) einer Ende-zu-Ende-Sitzung mit dem Knoten (300) basierend auf der auf RSVP beruhenden Pfadmeldung und Übermitteln einer Reservierungsmeldung an den Sendehost (110) durch den Knoten (300);
Erstellen, bei dem Sendehost (110) einer der Ende-zu-Ende-Sitzung zugeordneten Tunnelsitzung mit dem Knoten (300) beim Empfang der Reservierungsmeldung, und dann Übermitteln einer Tunnelpfadmeldung, die Identifizierungsinformation für die Tunnelsitzung beinhaltet, an den Knoten (300);
Einbeziehen, bei dem Sendehost (110), der Identifizierungsinformation in das Paket, und Übermitteln eines resultierenden Pakets an den Knoten (300) durch die Tunnelsitzung, und
Übermitteln bei dem Knoten (300), des Pakets an den Empfangshost (210) durch eine der Tunnelsitzung zugeordneten Ende-zu-Ende-Sitzung basierend auf der Identifizierungsinformation des Pakets.

18. Verfahren nach Anspruch 17, weiterhin die folgenden Schritte aufweisend:
Einkapseln, bei dem Sendehost (110), eines Kopfes in die auf RSVP beruhende Pfadmeldung und Übermitteln des eingekapselten Kopfes an den Knoten (300);
Dekapseln, bei dem Knoten (300), des Kopfes der auf RSVP beruhenden Pfadmeldung, und Übermitteln des dekapselten Kopfes an den empfangenen Host (210); und
Einkapseln, bei dem Knoten (300), des Kopfes in die Reservierungsmeldung, die von dem Empfangshost (210) empfangen wird, und Übermitteln des eingekapselten Kopfes an den Sendehost (110).

19. Verfahren nach Anspruch 17, wobei die Paketübermittlung die folgenden Schritte aufweist:
Verwalten, bei dem Knoten (300) von Identifizierungsinformation für jede Tunnelsitzung; und
Übermitteln des Pakets durch eine Tunnelsitzung, die der Identifizierungsinformation entspricht, die in einem Kopf des von dem Sendehost (110) empfangenen Pakets beinhaltet ist.

## Revendications

1. Système de traitement d'un paquet dans un réseau combiné IPv4/IPv6, le système comprenant :
un hôte émetteur (100) pour transmettre un message de trajet demandant une ressource de session à un hôte récepteur (200) lorsqu'il dispose d'un paquet à transmettre en conformité avec un protocole de réservation de ressources, également appelé "RSVP", et pour transmettre le paquet via une session établie de bout en bout ;
un premier noeud (310) situé à une frontière entre un réseau IPv6 et un réseau IPv4 pour établir une session tunnel qui est mise en correspondance avec la session de bout en bout établie avec l'hôte émetteur (100) afin de transmettre un message de trajet de tunnel contenant des informations d'identification permettant d'identifier chaque session vis-à-vis d'un deuxième noeud (320) avec lequel la session tunnel est établie, et pour transmettre le paquet qui est reçu via la session de bout en bout, par l'intermédiaire d'une session tunnel mise en correspondance ;
le deuxième noeud (320) servant à établir la session tunnel avec le premier noeud (310) et à reconnaître les informations d'identification contenues dans le message de trajet de tunnel et à transmettre le paquet, qui est reçu via la session tunnel, par l'intermédiaire d'une session de bout en bout mise en correspondance ; et
un hôte récepteur (200) pour transmettre un message de réservation à l'hôte émetteur (100) afin que chaque session soit établie lors de la réception du message de trajet par l'intermédiaire de chaque noeud en provenance de l'hôte émetteur (100).

2. Système selon la revendication 1, dans lequel le premier noeud (310) comprend, dans le paquet reçu, des informations d'identification correspondant à des informations de source et de destination contenues dans le paquet tout en gérant des informations concernant la session tunnel mise en correspondance avec la session de bout en bout, et est apte à transmettre un paquet résultant via la session tunnel.

3. Système selon la revendication 1, dans lequel, lors de la réception du message de réservation en provenance de l'hôte récepteur (200), le premier noeud (310) comprend le message de réservation dans un champ "étiquette de flux" d'un en-tête IPv6 du paquet contenant les informations d'identification permettant d'identifier la session tunnel, et est apte à transmettre un paquet résultant.

4. Système selon la revendication 1, comprenant en outre au moins un noeud situé entre le premier noeud (310) et le deuxième noeud (320) pour transmettre le paquet à une session tunnel correspondant aux informations d'identification contenues dans l'en-tête du paquet.

5. Système selon la revendication 1, dans lequel le deuxième noeud (320) est apte à désencapsuler le message de trajet de tunnel reçu du premier noeud (310), puis à réexpédier le message de trajet de tunnel désencapsulé à l'hôte récepteur (200) via une session de bout en bout correspondant à la session tunnel mise en correspondance.

6. Système selon la revendication 1, dans lequel chaque noeud est un noeud à deux piles ayant à la fois une pile IPv4 et une pile IPv6.

7. Système selon la revendication 1, dans lequel, lorsqu'au moins une session de bout en bout est établie, le premier noeud (310) est apte à établir chaque session tunnel mise en correspondance avec chaque session de bout en bout avec le deuxième noeud (320), et le premier noeud (310) comprend dans le paquet des informations d'identification destinées à une session tunnel, correspondant à l'une d'informations et d'informations de destination et de source dans un paquet reçu en provenance de chaque hôte, et est apte à transmettre un paquet résultant à la session tunnel mise en correspondance.

8. Système selon la revendication 1, dans lequel le deuxième noeud (320) comprend des informations de prise en charge du RSVP dans un message de réservation reçu de l'hôte récepteur (200), et est apte à transmettre un message de réservation résultant lorsque la session dépendant du RSVP peut être établie.

9. Système de traitement d'un paquet dans un réseau combiné IPv4/IPv6, le système comprenant :
un hôte émetteur (110) pour fournir un message de trajet demandant une ressource concernant une session pour transmettre le paquet en fonction d'un protocole de réservation de ressources, également appelé "RSVP", pour fournir un message de trajet de tunnel contenant des informations d'identification destinées à une session tunnel lorsque la ressource demandée est réservée, et pour transmettre le paquet via la session tunnel ;
un noeud (300) pour transmettre le paquet à une session de bout en bout mise en correspondance avec la session tunnel par l'intermédiaire de laquelle le paquet est reçu tout en gérant les informations d'identification destinées à la session tunnel établie avec l'hôte émetteur (110) et des informations concernant la session de bout en bout mise en correspondance avec la session tunnel ; et
un hôte récepteur (210) pour transmettre un message de réservation sur la base d'un message de trajet reçu via le noeud afin d'établir la session de bout en bout, et pour recevoir le paquet via la session de bout en bout.

10. Système selon la revendication 9, dans lequel le noeud est apte à désencapsuler un en-tête IPv6 d'un paquet reçu de l'hôte émetteur (110) et à réexpédier le paquet désencapsulé à l'hôte récepteur (210).

11. Système selon la revendication 9, dans lequel l'hôte émetteur (110) est apte à désencapsuler le paquet en incluant les informations d'identification destinées à la session tunnel dans un en-tête IPv6 du paquet.

12. Procédé pour traiter un paquet dans un réseau combiné IPv4/IPv6 qui comprend au moins un noeud, le procédé comprenant les étapes consistant à :
transmettre, depuis un hôte émetteur (100), un protocole de réservation de ressources, également appelé message de trajet dépendant du "RSVP", à un hôte récepteur par l'intermédiaire de chacun desdits, au moins un, noeuds ;
établir, sur l'hôte récepteur (200), au moins une session de bout en bout en réponse au message de trajet dépendant du "RSVP", et transmettre un message de réservation à l'hôte émetteur par l'intermédiaire de chacun desdits, au moins un, noeuds ;
établir, sur un premier noeud (310), une session tunnel mise en correspondance avec chacune desdites, au moins une, sessions de bout en bout lors de la réception du message de réservation, et transmettre un message de trajet de tunnel contenant des informations d'identification pour la session tunnel à un deuxième noeud (320) ;
comprenant, sur le premier noeud (310), les informations d'identification destinées à la session tunnel dans le paquet, la session tunnel étant mise en correspondance avec une session de bout en bout par l'intermédiaire de laquelle le paquet est reçu de l'hôte émetteur, et transmettre un paquet résultant au deuxième noeud via la session tunnel ; et
transmettre le paquet, depuis le deuxième noeud (320), à l'hôte récepteur (200) via la session de bout en bout mise en correspondance avec la session tunnel sur la base des informations d'identification du paquet.

13. Procédé selon la revendication 12, dans lequel le message de trajet de tunnel est produit par le premier noeud (310) en encapsulant un en-tête IPv6 contenant les informations d'identification pour chacune desdites sessions tunnels lors de la réception du message de réservation.

14. Procédé selon la revendication 12, dans lequel chacun desdits, au moins un, noeuds émet le paquet vers la session tunnel correspondant aux informations d'identification contenues dans un en-tête du paquet reçu tout en gérant les informations d'identification pour chaque session tunnel.

15. Procédé selon la revendication 12, dans lequel les informations d'identification sont définies dans un champ "étiquette de flux" d'un en-tête IPv6.

16. Procédé selon la revendication 12, comprenant en outre les étapes consistant à :
encapsuler, dans le premier noeud (310), le message de trajet dépendant du RSVP reçu, et transmettre le message de trajet encapsulé au deuxième noeud (320) ;
désencapsuler, sur le deuxième noeud (320), le message de trajet encapsulé et transmettre le message de trajet désencapsulé à l'hôte récepteur (200) ;
établir, sur l'hôte récepteur (200), la session de bout en bout en réponse au message de trajet désencapsulé reçu, et transmettre un message de réservation au deuxième noeud (320) ;
inclure, sur le deuxième noeud (320), les informations pouvant être prises en charge par RSVP dans le message de réservation, puis transmettre un message de réservation résultant au premier noeud (310) ;
transmettre, sur le premier noeud (310), au deuxième noeud (320), un message de trajet de tunnel, contenant des informations d'identification pour la session tunnel mise en correspondance avec la session de bout en bout, en réponse aux informations pouvant être prises en charge par RSVP contenues dans le message de réservation ; et
établir, sur le deuxième noeud (320), la session tunnel en réponse au message de trajet de tunnel, et transmettre le message de réservation de tunnel au premier noeud (310).

17. Procédé de traitement d'un paquet dans un réseau combiné IPv4/IPv6 comportant au moins un noeud, le procédé comprenant les étapes consistant à :
transmettre, sur un hôte émetteur (110), un message de trajet dépendant d'un protocole de réservation de ressources également appelé "RSVP", à un hôte récepteur (210) via un noeud (300) ;
établir, sur l'hôte récepteur (210), une session de bout en bout avec le noeud (300) sur la base du message de trajet dépendant du RSVP, et transmettre un message de réservation à l'hôte émetteur (110) via le noeud (300) ;
établir, sur l'hôte émetteur (110), une session tunnel mise en correspondance avec la session de bout en bout avec le noeud (300) lors de la réception du message de réservation, puis transmettre un message de trajet de tunnel contenant des informations d'identification pour la session tunnel vers le noeud (300) ;
inclure, sur l'hôte émetteur (110), les informations d'identification dans le paquet, et transmettre un paquet résultant au noeud (300) via la session tunnel ; et
transmettre, sur le noeud (300), le paquet à l'hôte récepteur (210) via une session de bout en bout mise en correspondance avec la session tunnel sur la base des informations d'identification du paquet.

18. Procédé selon la revendication 17, comprenant en outre les étapes consistant à :
encapsuler, sur l'hôte émetteur (110), un en-tête dans le message de trajet dépendant du RSVP, et transmettre l'en-tête encapsulé au noeud (300) ;
désencapsuler, sur le noeud (300), l'en-tête du message de trajet dépendant du RSVP, et transmettre l'en-tête désencapsulé à l'hôte récepteur (210) ; et
encapsuler, sur le noeud (300), l'en-tête dans le message de réservation reçu de l'hôte récepteur (210), et transmettre l'en-tête encapsulé à l'hôte émetteur (110).

19. Procédé selon la revendication 17, dans lequel la transmission du paquet comprend les étapes consistant à :
gérer, sur le noeud (300), des informations d'identification pour chaque session tunnel ; et
transmettre le paquet via une session tunnel correspondant aux informations d'identification contenues dans un en-tête du paquet reçu de l'hôte émetteur (110).
